(19) **Europäisches Patentamt / European Patent Office / Office européen des brevets**

(11) **EP 4 395 926 B1**

(12) ## EUROPEAN PATENT SPECIFICATION

(45) Date of publication and mention
of the grant of the patent:
**24.06.2026  Bulletin 2026/26**

(21) Application number: **22773175.9**

(22) Date of filing: **02.09.2022**

(51) International Patent Classification (IPC):
**B01J 19/18** *(2006.01)*    **B01J 19/00** *(2006.01)*

(52) Cooperative Patent Classification (CPC):
**B01J 19/1806; B01J 19/006; B01J 19/0066;
B01J 19/1862;** B01J 2208/0084; B01J 2208/00849;
B01J 2208/00867; B01J 2219/00033;
B01J 2219/00094; B01J 2219/00763;
B01J 2219/185; B01J 2219/1943

(86) International application number:
**PCT/EP2022/074433**

(87) International publication number:
**WO 2023/031391 (09.03.2023 Gazette 2023/10)**

(54) **CONTINUOUS FLOW REACTOR WITH REMOVABLE INSERT WITH BAFFLES**

DURCHFLUSSREAKTOR MIT ABNEHMBAREM EINSATZ MIT ABLENKBLECHEN

RÉACTEUR À FLUX CONTINU À INSERT AMOVIBLE AVEC DÉFLECTEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2021  GB 202112552**

(43) Date of publication of application:
**10.07.2024  Bulletin 2024/28**

(73) Proprietor: **STOLI CATALYSTS LTD.
Wellesbourne, Warwichshire CV35 9EF (GB)**

(72) Inventors:
• **ADAMS, Samuel
Wellesbourne Campus Wellesbourne
Warwickshire CV35 9EF (GB)**
• **CHATRE, Lucas
Wellesbourne Campus Wellesbourne
Warwickshire CV35 9EF (GB)**
• **SOCCI, Joseph
Wellesbourne Campus Wellesbourne
Warwickshire CV35 9EF (GB)**

• **REBROV, Evgeny
Wellesbourne Campus Wellesbourne
Warwickshire CV35 9EF (GB)**
• **LAMBDEN, Daniel
Wellesbourne Warwickshire CV35 9EF (GB)**
• **CHERKASOV, Nikolay
Wellesbourne Campus Wellesbourne
Warwickshire CV35 9EF (GB)**

(74) Representative: **Alembia Intellectual Property
Limited
Biohub at Alderley Park
Alderley Park
Macclesfield, Cheshire SK10 4TG (GB)**

(56) References cited:
EP-A1- 3 075 446     WO-A1-2009/139848
WO-A1-2020/113264    WO-A2-2013/019592
JP-A- S5 460 274     JP-A- S5 460 275
US-A- 4 442 273      US-A1- 2011 110 831

**Description**

FIELD

This specification relates to continuous flow reactors and their use to perform chemical or biochemical reactions. Subject matter in the specification was derived from a project receiving funding from the European Union's Horizon 2020 research and innovation programme, under grant agreement No. 848926.

BACKGROUND

Multi-component reactions require intimate interaction between reactants and reagents in order for molecules to react. As a result, reaction rates and mixing are intrinsically linked. This is especially true of chemical reactions that rely on catalysis, since good mixing is needed to transfer reactants and products to and from the active sites of the catalyst. Mixing also introduces and removes reaction heat, with efficient heat transfer providing a controllable reaction temperature that can improve product quality in turn.

In many industrial chemical reactions mixing is achieved using a conventional batch reactor. Such reactors generally include a reaction vessel able to house the necessary reaction components and means such as an overhead mechanical stirrer to mix components together and allow reaction. Batch reactors are versatile, allow reasonable scalability, provide for long reactant residence time and are able to handle liquids, solids and gases. However, by definition they provide a "stop/start" method of manufacturing which is cumbersome and inefficient to perform. Furthermore, reactions in batch reactors may be difficult to control, which can present a safety issue, particularly for highly exothermic reactions.

These issues may sometimes be addressed using flow chemistry. In conventional flow reactors, mixing arises either from diffusion or the crossing of fluidic paths. In micro-flow systems however, the possibility of intimate contact between the flows through micro-mixing creates unique opportunities for performing extremely fast reactions (called flash chemistry), while in systems with multiple sub-millimetre channels the reactants can still be combined and mixed with the help of viscous forces and static mixers. In the latter case, the mixing energy comes from viscous forces, where the energy of pumps translates into fluid velocity and mixing energy.

Not all reactions, however, are intrinsically quick. Indeed, some processes require minutes or even hours of residence time (i.e. time spent within the reaction vessel) while being well mixed. In flow chemistry, long residence times could be provided by either reducing fluid velocity or creating long reaction channels, but both are impractical: a low fluid velocity does not provide the mixing required, and a high fluid velocity in reactors with small diameters and long lengths requires an extreme inlet pressure which is difficult to achieve due to prohibitive equipment costs. These challenges also complicate process scale-up since any process design demands complex calculations and intricate piloting experiments.

There have been earlier attempts to produce continuous flow reactors to address these issues. One known approach involves connecting a series of discrete conventional batch reactors, so that the outlet of the first reactor passes to the inlet of the second reactor, and so on (see for example the continuous stirred-tank reactor ["CSTR"] as described in H. Scott Fogler's "Essentials of Chemical Reaction Engineering", Prentice Hall, 2010). The operation of this apparatus is similar to that of the continuous flow reactors of this specification, but the greater complexity is obvious. A single continuous flow reactor according to the present technology may involve a single reaction vessel, a magnetic drive and a motor. Conventional continuous stirred-tank reactors in (for example) a series of four involve four discrete vessels, four magnetic drives and four motors, as well as additional interconnections and valves. As a result, the continuous flow reactor detailed in this specification costs roughly four times less than the series of conventional reactors and has a higher reliability due to the elimination of interconnections and seals.

A different type of continuous flow reactor that uses oscillatory flow to mix fluids is mentioned in WO 2016/009177. This type of reactor may be efficient in providing mixing energy but has limited scalability due to the dependence of its mixing on high-velocity fluid movement. This requires oscillatory pressure, which in turn depends on high-velocity oscillatory movement. The oscillatory pressure required for mixing rapidly increases with scale and may be above the pressure of the process being carried out. As a result, the pressure rating for the reactor, all upstream components, and the oscillatory pump must be pressure-rated not only for the required process; but for the oscillatory pressure required for mixing. Such high-pressure reactors and components rapidly increase the costs of the reactor hardware, pumping equipment and increase process risks.

In addition, oscillatory movement is rapid close to the inlet of the oscillatory flow reactor but slows down due to viscous forces, resulting in a rapid decrease in the mixing energy towards the reactor outlet. Such phenomena may be compensated with a higher mixing energy, but this requires higher-pressure pumps and creates the abovementioned problems of pressure and flow. Overall, scaling up oscillatory reactors therefore requires substantial complexity and introduces significant performance limitations along the reactor length and at larger scale.

A final known continuous flow reactor is an agitated cell reactor, such as that mentioned in GB2475401. Agitated cell reactors provide mixing energy by oscillating an entire reactor unit. These motions are translated to weights within multiple reaction vessels, mixing their contents. While this reactor design effectively works as a series of 10-100 continuously stirred tank reactors providing improved control of the reaction parameters, its benefits come at the price of a complex internal structure. More importantly, the mass of the moving part of the apparatus (the whole reactor) is substantially higher compared to reactors of the present specification (the shaft(s) and agitators only), which increases mechanical stress, vibrations, and noise. Because of these issues, scaling up an agitated cell reactor beyond 100 kg/day requires increasing the mobile mass of the reactor, exponentially increasing power consumption and the costs of scaling up.

As a result, there remains a need for a chemical reactor that can operate in a continuous flow mode but accommodate a wide range of processes, reaction residence times and allow easier scaling than traditional flow chemistry apparatus. The continuous flow reactors disclosed in this specification address these issues and combine the benefits of both batch and flow reactors, offering excellent reaction control, enhanced product quality, lower energy consumption and overall process efficiency with the ability to handle liquid, solid or gaseous reaction components. Most importantly, the technology herein is simpler and easier to maintain and scale.

These beneficial effects are achieved by the use of a removable insert which is configured to separate the internal space of the reactor into a plurality of interconnected mixing chambers, the properties of which can be selected to allow "tuneable" control of reaction residence time. Practicality is afforded by the use of a small gap between the outside of the insert and the reactor's internal wall, which facilitates insert removal to assist maintenance or cleaning. Surprisingly, this gap has been found not to cause issues with "backmixing", which occurs during use when a portion of the reaction flow goes in the opposite direction to the bulk fluid. Substantial backmixing is to be avoided since it makes the residence time distribution broad: the reactants may spend a far less defined amount of time in the reactor leading to lower control, lower selectivity and ultimately poorer productivity.

There is some understanding of the parameters that affect backmixing in reactors, the most crucial being that the sides of the internal reaction structures such as baffles must completely seal against the reactor walls. Xu et al. (Ind. Eng. Chem. Res. 2005, 6103) state that "the gap between the stage divider and the column wall [...] must be eliminated in order to design and operate a multistage, compartmented column with zero or minimal backmixing". Similarly, Vidaurri et al. (AIChE 1985, Vol. 31, No. 5) note that in the apparatus described "a tight seal was required between the interstage baffles and the glass wall to eliminate additional interstage circulation paths" (i.e. backmixing). Given these teachings, it is remarkable that the gap characterising the current reactor technology does not cause appreciable backmixing issues.

WO 2020/136923 mentions reactors suitable for housing chemical processes. The reactors in WO 2020/136923 may comprise baffle-like disc structures which extend across the reactor body to leave a gap between their edge and the interior reactor wall. The disc structures are not removably fixed to the reaction vessel like the baffles in the present disclosure, nor do they comprise any openings to permit the passage of reaction materials. Instead, the gap between the disc edges and the reactor wall allows movement of fluid through the reactor. During use, the disc structures in WO 2020/136923 rotate to create agitation, all while maintaining a gap between their outer edges and the reactor wall. This is in contrast to the baffles in the present disclosure, which do not rotate during use.

Maintaining the gap during rotation in the reactors of WO 2020/136923 requires a rigid construction, increases rotating mass, limits rotation rates, and creates major problems of process scale-up, maintenance, cleaning, and scale-up. The fluid movement created by such reactors directs the flow of reaction fluid through the gaps with significant backmixing and corresponding reduction of the process throughput. These problems are avoided when using the reactors of this specification.

JP S54 60275 A, JP S54 60274 A, WO 2013/019592 A2 disclose reactor comprising agitators and a removable baffle separating the agitators. The baffle maintaining a gap between the outer edge of the baffle and the inner surface of the reaction vessel.

SUMMARY

A primary objective of the present specification is to provide a chemical reactor which combines the benefits of batch-processing reactors (scalability, versatility) with those of flow reactors (reaction control, enhanced product quality and efficiency), while also having enhanced practicality (ease of maintenance).

Accordingly, this specification describes, in part, a continuous flow reactor as claimed in claim 1.

ILLUSTRATIVE EMBODIMENTS

The invention detailed in this specification should not be interpreted as being limited to any of the explicitly recited embodiments or examples. Other embodiments will be readily apparent to a reader skilled in the art.

*Continuous Flow Reactor*

In one embodiment there is provided a continuous flow reactor comprising:

- A reaction vessel comprising an inlet and an outlet;
- A rotating shaft bearing at least two agitators enclosed by the reaction vessel;
- Means to drive the rotating shaft; and
- A reaction vessel insert comprising a baffle attached to a support, the baffle comprising an opening permitting the flow of liquid through it;

The insert being removably fixed within the reactor such that in use a baffle separates the agitators into interconnected mixing chambers each enclosing an agitator, while maintaining a gap between the outer edge of the baffle and the inner surface of the reaction vessel that allows the insert to be removed more easily for cleaning.

*General Definitions*

"Excessive backmixing" can be determined by comparing the number of physical CSTRs (or the number of interconnected mixing chambers) a reactor possesses with the number of ideal CSTRs it has determined according to a "tanks in series" model (for example, the model described in Example 3a). A reactor with excessive backmixing may mean any system where there is at least a 70%, 60%, 50%, 40% or 30% reduction in the number of ideal CSTRs compared to physical CSTRs (or interconnected mixing chambers) at a given residence time (for example a mean residence time of 12 minutes, 20 minutes or 120 minutes) and mixing rate (or stirring speed, for example a stirring speed of 200 rpm, 500 rpm, or 1000 rpm). A stirring speed corresponds to the speed a motor which rotates the rotating shaft turns.

In some embodiments, excessive backmixing means that when tested using the methods described in Example 3a, a reactor has at least a 70%, 60%, 50%, 40% or 30% reduction in the number of ideal CSTRs compared to interconnected mixing chambers at a mean residence time of 12 minutes, 20 minutes or 120 minutes and a stirring speed of 200 rpm, 500 rpm, or 1000 rpm.

In some embodiments, excessive backmixing means that when tested using the methods described in Example 3a, a reactor has at least a 70% reduction in the number of ideal CSTRs compared to interconnected mixing chambers at a mean residence time of 12 minutes and a stirring speed of 200 rpm.

In some embodiments, excessive backmixing means that when tested using the methods described in Example 3a, a reactor has at least a 50% reduction in the number of ideal CSTRs compared to interconnected mixing chambers at a mean residence time of 12 minutes and a stirring speed of 200 rpm.

In some embodiments, excessive backmixing means that when tested using the methods described in Example 3a, a reactor has at least a 30% reduction in the number of ideal CSTRs compared to interconnected mixing chambers at a mean residence time of 12 minutes and a stirring speed of 200 rpm.

In any embodiment, the term "avoids excessive backmixing" may be replaced by "reduces backmixing", "minimises backmixing" or "avoids backmixing".

When an element or group of elements is "enclosed", enclosure may be total or partial (for example 10%, 20%, 30%, 40%, 50%, 60%, 70%, 80% or 90% of an element's total surface area or volume may be enclosed). When a group of elements is "enclosed by the reaction vessel", all of the elements (e.g. a rotating shaft and any agitators it bears) may be so enclosed, or only part of the elements (e.g. part of a rotating shaft may protrude from the reaction vessel).

A baffle separating the agitators separates the agitators from each other, partially or entirely.

When it is stated that an insert is "removably fixed within the reactor", this includes arrangements where the actual point of fixation is either inside or outside the reactor, as long as the insert is held in place within the reactor interior during use.

The "gap between the outer edge of the baffle and the inner surface of the reaction vessel" may be measured from a point starting on the baffle's outer edge extending straight toward the nearest point on the reaction vessel inner wall. For example, where the reactor is cylindrical and the baffle is a substantially flat annular or disc-like structure placed centrally within it, the gap may be measured radially outwards from a point on the baffle's outer circumference to the point on the reaction vessel inner wall. In some embodiments where a gap is mentioned, the gap may be an average value (for example a mean or median value) of the distances mentioned above.

"A" or "an" mean "at least one". In any embodiment where "a" or "an" are used to denote a given material or element, "a" or "an" may mean one. In any embodiment where "a" or "an" are used to denote a given material or element, "a" or "an" may refer to a plurality of such elements (for example 1, 2, 3, 4, 5, 6, 7, 8, 9, 10, 100, 1000, 10000, 100000 or 1000000 [1 million]).

When an embodiment includes "a" or "an" feature X, subsequent referrals to "the" feature X do not imply only one of the feature is present. Instead the above interpretation of "a" or "an" continues to apply so that "the" also means "at least one". In other words, embodiments comprising statements such as "a feature X, where the feature X is..." (or similar syntax) should be construed as "at least one feature X, where the at least one feature X is...".

"Comprising" means that a given embodiment may contain other features. For example, in any embodiment where a material "comprising" certain materials or elements is mentioned, the given material may be formed of at least 10% w/w, at least 20% w/w, at least 30% w/w, or at least 40% w/w of the materials or elements (or combination of materials or elements).

In any embodiment where "comprising" is mentioned, "comprising" may also be replaced by "consisting of" (or "consists of") or "consisting essentially of" (or "consists essentially of").

"Consisting of" or "consists of" a given material or element is formed entirely of the material or element (or combination of materials or elements). In any embodiment where "consisting of" or "consists of" is mentioned the given material or element may be formed of 100% w/w of the material or element.

"Consisting essentially of" or "consists essentially of" means that a given material or element consists almost entirely of that material or element (or combination of materials or elements). In any embodiment where "consisting essentially of" or "consists essentially of" is mentioned the given material or element may be formed of at least 50% w/w, at least 60% w/w, at least 70% w/w, at least 80% w/w, at least 90% w/w, at least 95% w/w or at least 99% w/w of the material or element.

In any embodiment where "is" or "may be" is used to define a material or element, "is" or "may be" may mean the material or element "consists of" or "consists essentially of" the material or element.

When it is mentioned that "in some embodiments..." a certain element may be present, the element may be present in a suitable embodiment in any part of the specification, not just a suitable embodiment in the same section or textual region of the specification.

When a feature is "selected from" a list, the feature is selected from a list consisting of the specified alternatives (i.e. a list of the alternatives specified and no others).

In any embodiment of this specification where "about" is mentioned, "about" may mean +/-0 (i.e. no variance), +/- 0.01%, +/- 0.05%, +/- 0.1%, +/- 0.5%, +/- 1%, +/- 2%, +/-5%, +/- 10%, +/- 20%, or +/- 30% of the given value.

Claims are embodiments.

*Reaction Vessel*

The reaction vessel provides a hollow volume in which to perform reactions. It can be of any suitable size or shape (both regular and irregular) as long as this primary function is preserved.

In some embodiments the reaction vessel volume may be between about 0.01L and about 10000L. The reaction vessel volume is determined without the presence of any internal components such as the insert.

In some embodiments the reaction vessel volume may be between 0.01L and 10000L.

In some embodiments the reaction vessel volume may be between about 0.01L and about 1000L.

In some embodiments the reaction vessel volume may be between 0.01L and 1000L.

In some embodiments the reaction vessel volume may be between about 0.01L and about 500L.

In some embodiments the reaction vessel volume may be between 0.01L and 500L.

In some embodiments the reaction vessel volume may be between about 0.01L and about 100L.

In some embodiments the reaction vessel volume may be between 0.01L and 100L.

In some embodiments the reaction vessel volume may be between about 10L and about 500L.

In some embodiments the reaction vessel volume may be between 10L and 500L.

In some embodiments the reaction vessel volume may be between about 50L and about 500L.

In some embodiments the reaction vessel volume may be between 50L and 500L.

In some embodiments the reaction vessel volume may be between about 0.1L and 20L.

In some embodiments the reaction vessel volume may be between 0.1L and 20L.

In some embodiments the reaction vessel volume may be about 0.1L, about 1L, about 10L or about 100L.

In some embodiments the reaction vessel may be cylindrical (i.e. comprising a circular cross-section).

In some embodiments the reaction vessel may have a length to diameter ratio between about 1:1 and about 100:1.

In some embodiments the reaction vessel may have a length to diameter ratio between about 2:1 and about 20:1.

In some embodiments the reaction vessel may be cylindrical and have a length to diameter ratio between about 1:1 and about 100:1.

In some embodiments the reaction vessel may be cylindrical and have a length to diameter ratio between about 2:1 and about 20:1.

In some embodiments the reaction vessel may be a tube.

In some embodiments the reaction vessel may be a tube with a length to diameter ratio between about 1:1 and about 100:1.

In some embodiments the reaction vessel may be a tube with a length to diameter ratio between about 2:1 and about 20:1.

In some embodiments the reaction vessel may be a tube with a length to diameter ratio between 1:1 and 100:1.

In some embodiments the reaction vessel may be a tube with a length to diameter ratio between 2:1 and 20:1.

In some embodiments the reaction vessel may be a tube with an end sealed using a flange arrangement. Flanged openings provide an additional larger opening port which allows access to the reaction vessel interior for e.g. cleaning, but which when constructed from the necessary materials (e.g. metal) and suitably sealed can withstand high pressures (for example up to 300 Bar).

In some embodiments the reaction vessel may be a tube with both ends sealed using a flange arrangement.

The reaction vessel can be constructed from any suitable material able to withstand the conditions of a particular reaction being performed, including with respect to temperature and pressure, or any combination of such materials.

In some embodiments the reaction vessel may consist essentially of metal, plastic, ceramic or glass material.

In some embodiments the reaction vessel may consist essentially of stainless steel (such as stainless steel 316L) or an alloy (for example a nickel alloy such as Hastelloy®, such as Hastelloy® C276).

The reaction vessel is provided with an inlet and outlet to allow introduction of reactants and removal of products respectively. Any structural feature that allows the introduction of a reactant may be considered an inlet, and any structural feature that allows removal of a product may be considered an outlet. Multiple inlets and outlets may be installed. Other structural features of a reactor may have dual functions as inlets and/or outlets, for example a suitably modified rotating shaft or baffle support rod.

In some embodiments the inlet and outlet may be positioned at opposite ends of the reaction vessel.

In some embodiments the inlet may be positioned at the bottom of the reaction vessel and the outlet at the top of the reaction vessel. "Top" and "bottom" in this context may refer to respective vertical ends of the installed reaction vessel.

In some embodiments the continuous flow reactor may comprise means to control the reaction temperature.

In some embodiments the continuous flow reactor may comprise means to heat the reaction vessel contents (for example a heat exchanger [e.g. one comprising pipes passing through the reaction vessel through which a heated liquid can pass] an electric heater such as a band or cartridge heater, or a liquid transfer heater like an oil jacket).

In some embodiments the continuous flow reactor may comprise means to cool the reaction vessel contents (for example a heat exchanger [e.g. one comprising pipes passing through the reaction vessel through which a coolant liquid can pass] or condenser).

In some embodiments the continuous flow reactor may comprise means to heat and/or cool the reaction vessel contents.

*Rotating Shaft*

The rotating shaft and its agitators are the primary means by which mechanical energy is transferred from the driving means to the reaction vessel contents. This decouples mixing from the velocity of fluid continually passing through the system, allowing the scale-up of flow processing using techniques tested in batch. To enable it to contact a reaction mixture and transfer energy the rotating shaft is entirely or substantially enclosed within the reaction vessel, as are the agitators it bears.

In some embodiments a continuous flow reactor may comprise multiple rotating shafts each bearing at least two agitators. In such an arrangement, the group of multiple shafts may be positioned substantially centrally with respect to the reaction vessel (e.g. the centre of the grouped shafts width may be substantially central with respect to the reaction vessel width, for a vertically installed reactor).

In some embodiments a rotating shaft may be vertical. This means the shaft is installed so that its greatest length extends vertically and the shaft rotates around this vertical axis. In such an arrangement the vertical shaft may be substantially parallel to the longest wall(s) of the reaction vessel (its height, for a vertically installed reactor).

In some embodiments a rotating shaft may extend through substantially the entire length (or height, depending on installation orientation) of the reaction vessel.

In some embodiments a rotating shaft may extend through the entire length (or height) of the reaction vessel.

In some embodiments a rotating shaft may be positioned substantially centrally with respect to the reaction vessel (e.g. running centrally through a reaction vessel in parallel to the vertically installed vessel walls).

In some embodiments a rotating shaft may be positioned centrally with respect to the reaction vessel.

In some embodiments a rotating shaft may comprise supporting means (for example bearings, or a bushing). This helps to reduce shaft vibration, which further improves reaction control.

In some embodiments a rotating shaft may be seated on a bearing (for example within a bearing housing, or within an inner bearing ring).

In some embodiments a rotating shaft may be seated within a bushing (for example a bushing held within the optional spacer of a reaction vessel insert). In some embodiments seating may be accomplished be means of a small disc extending around the shaft which can rest against the bushing.

In some embodiments a rotating shaft may be extendable (for example by means of a terminal adapter). This improves the ability of the reactor to handle slurries.

In some embodiments, a rotating shaft may be removable (for example as part of a removable reaction insert in which it is held, for example, by a spacer).

*Agitators*

Agitators are the primary means by which the rotating shaft imparts turbulence to a reaction. They may include any structure that fulfils this basic property, including for example turbines or impellers.

When a rotating shaft "bears" an agitator, this includes discrete agitators fixed to the shaft, integral agitators machined or moulded from the shaft, and other any suitable means of associating an agitator with a shaft.

In some embodiments agitators may be regularly spaced along the longest axis of the rotating shaft.

In some embodiments an agitator may be arranged horizontally and the rotating shaft that bears it arranged vertically with respect to the reaction vessel (e.g. an agitator such as a Rushton impeller may have its diameter arranged horizontally and the rotating shaft it is attached to may extend its longest length vertically through the reaction vessel).

In some embodiments an agitator may be substantially perpendicular to the longest axis of the rotating shaft (e.g. the blades of an impeller may extend substantially horizontally from a vertical rotating shaft they are fixed to).

In some embodiments a rotating shaft may bear between 2 and 100 agitators.

In some embodiments a rotating shaft may bear between 20 and 80 agitators.

In some embodiments a rotating shaft may bear between 30 and 50 agitators.

In some embodiments a rotating shaft may bear between 1 and 200 agitators per metre length of the shaft.

In some embodiments a rotating shaft may bear between 1 and 150 agitators per metre length of the shaft.

In some embodiments a rotating shaft may bear between 1 and 100 agitators per metre length of the shaft.

In some embodiments a rotating shaft may bear between 1 and 50 agitators per metre length of the shaft.

In some embodiments a rotating shaft may bear between 10 and 200 agitators per metre length of the shaft.

In some embodiments a rotating shaft may bear between 10 and 40 agitators per metre length of the shaft.

In some embodiments a rotating shaft may bear between 5 and 30 agitators per metre length of the shaft.

In some embodiments a rotating shaft bears between 15 and 20 agitators per metre length of the shaft.

In some embodiments a rotating shaft bears between 30 and 200 agitators per metre length of the shaft.

In some embodiments a rotating shaft bears between 40 and 200 agitators per metre length of the shaft.

In some embodiments a rotating shaft bears between 40 and 150 agitators per metre length of the shaft.

In some embodiments a rotating shaft bears about 40 and 150 agitators per metre length of the shaft.

In some embodiments an agitator may comprise supporting means (for example bearings) to reduce its vibration.

In some embodiments an agitator may be seated on a bearing to reduce its vibration.

In some embodiments an agitator may be selected from a turbine and an impeller.

In some embodiments an agitator may be a turbine.

In some embodiments an agitator may be an impeller.

In some embodiments an impeller may be selected from an open impeller, a semi-open impeller and a closed impeller.

In some embodiments an agitator may be selected from a Rushton impeller, a pitch blade impeller, a high head closed channel impeller, a vortex impeller, a centrifugal screw impeller, a propeller, a shredder impeller, an anchor-type impeller, and a mixed flow impeller.

In some embodiments an impeller may be a Rushton impeller.

*Reaction Vessel Insert*

The continuous flow reactors described in this specification comprise a reaction vessel insert. The insert comprises a baffle attached (e.g. by a welded joint, clips, or other joining methods known in the art) to a support, the baffle comprising an opening permitting the flow of liquid through it. The supported baffle(s) effectively separate individual agitators into mixing chambers interconnected by the baffle opening, each chamber housing at least one agitator. The improved mixing and reaction residence time delivered by this arrangement allies the reaction control and convenience of a flow process to the scalability of a traditional batch reactor.

Baffles are non-rotating. While they may move slightly in use due to movement transmitted from other reactor components (e.g. the rotating shaft) their rotatory movement is not significant or necessary to achieve a mixing effect.

Suitable baffle shapes may include disks, cones or more complex geometrical arrangements. Baffles may be engineered to comprise openings, for example to accommodate a rotating shaft (e.g. to let a rotating shaft pass through the structure either in contact with the baffle structure or with a gap around the shaft to additionally permit the passage of reaction fluids), and/or openings that allow the passage of reaction fluids alone. Baffles and other reaction vessel insert components can be made from any suitable material, most conveniently plastic or metal (e.g. stainless steel such as stainless steel 316L, or an alloy - for example a nickel alloy such as Hastelloy®, such as Hastelloy® C276).

"Mixing chambers" are specifically designed to engender thorough mixing and may lack any significant "calm zones" designed to allow at least partial settlement of reaction components.

In some embodiments, the height:diameter ratio of a mixing chamber may be between about 1:10 to about 10:1.

In some embodiments not all adjacent agitators may be separated by a baffle (so that mixing chambers may for example house two or more agitators).

In some embodiments all adjacent agitators may be separated by a baffle (so that mixing chambers may for example house only a single agitator).

In some embodiments a baffle may be substantially flat.

In some embodiments a baffle may be substantially conical.

In some embodiments a baffle may be a disk.

In some embodiments the reaction vessel may be cylindrical and the baffle may be a substantially flat annular structure with an opening (for example a central opening) configured to accommodate a rotating shaft and permit the flow of reaction liquid.

In some embodiments a baffle's opening may be positioned substantially centrally with respect to the reaction vessel.

In some embodiments a baffle's opening may have a diameter which is about 120% of the diameter of a rotating shaft.

In some embodiments a baffle's opening may have a diameter which is 120% of the diameter of a rotating shaft.

In some embodiments a baffle may comprise a central circular opening having a diameter which is about 120% of the diameter of a rotating shaft.

In some embodiments a baffle may comprise a central circular opening having a diameter which is 120% of the diameter of a rotating shaft.

In some embodiments a baffle may comprise a central circular opening configured to receive a rotating shaft, the opening having a diameter which is about 120% of the diameter of a rotating shaft.

In some embodiments a baffle may comprise a central circular opening configured to receive a rotating shaft, the opening having a diameter which is 120% of the diameter of a rotating shaft.

Various supports can be used to hold the reaction insert baffles in the correct arrangement to separate the reaction vessel interior. In some embodiments a support may comprise a support rod, which for example may "thread through" the outer baffle region to stack multiple baffles and create the reaction vessel insert.

"Support rods" may include solid rods of material or hollow tubes, and may be made of any suitable material (e.g. plastic or metal such as stainless steel (e.g. stainless steel 316L) or an alloy (for example a nickel alloy such as Hastelloy®, such as Hastelloy® C276). They may be constructed in a modular fashion (as may other support structures), for example allowing multiple arrangements each comprising a support rod and a baffle mounted thereto to be joined together to form larger insert constructions comprising more baffles stacked atop each other.

In some embodiments a support may comprise between two and ten support rods.

In some embodiments a support may comprise between two and four support rods.

In some embodiments a support may comprise four support rods distributed equidistantly around a baffle's outer edge region.

In some embodiments all baffles separating the agitators into interconnected mixing chambers may be attached to and spaced evenly along a support rod.

In some embodiments all baffles separating the agitators into interconnected mixing chambers may be attached to and spaced evenly along a support rod installed parallel to a rotating shaft.

In some embodiments all baffles separating the agitators into interconnected mixing chambers may be attached to and spaced evenly along two support rods installed parallel to a rotating shaft.

In some embodiments all baffles separating the agitators into interconnected mixing chambers may be attached to and spaced evenly along two support rods flanking a rotating shaft in parallel, the rotating shaft held centrally with respect to the baffle and the support rods passing through the baffle along its diameter.

In use, the reaction vessel insert is removably fixed to (or held within) the reactor in such a way that baffle separates the agitators into interconnected mixing chambers each enclosing an agitator, while maintaining a gap between the outer edge of the baffle and the inner surface of the reaction vessel that allows the insert to be removed more easily for cleaning.

In the invention, the gap is between $20\mu m$ and $100\mu m$ in size.

In some embodiments, a gap may be about $20\mu m$ in size.

In some embodiments, a gap may be about $100\mu m$ in size.

In some embodiments, a gap may be between about $30\mu m$ and about $75\mu m$ in size. This range provides the best balance of ease of removal and avoidance of backmixing.

In some embodiments, a gap may be between 30μm and 75μm in size.

In some embodiments, a gap may be about 30μm in size.

In some embodiments, a gap may be about 75μm in size.

In some embodiments, the reaction vessel may be cylindrical and the baffle may be a substantially flat annular structure fixed centrally within it, and the gap may be formed from a difference in diameter between the reactor and the baffle of between about 40μm and about 200μm.

In some embodiments, the reaction vessel may be cylindrical and the baffle may be a substantially flat annular structure fixed centrally within it, and the gap may be formed from a difference in diameter between the reactor and the baffle of between 40μm and 200μm.

In some embodiments, the reaction vessel may be cylindrical and the baffle may be a substantially flat annular structure fixed centrally within it, and the gap may be formed from a difference in diameter between the reactor and the baffle of about 40μm.

In some embodiments, the reaction vessel may be cylindrical and the baffle may be a substantially flat annular structure fixed centrally within it, and the gap may be formed from a difference in diameter between the reactor and the baffle of about 200μm.

In some embodiments, the reaction vessel may be cylindrical and the baffle may be a substantially flat annular structure fixed centrally within it, and the gap may be formed from a difference in diameter between the reactor and the baffle of between about 100μm and about 1μm.

In some embodiments, the reaction vessel may be cylindrical and the baffle may be a substantially flat annular structure fixed centrally within it, and the gap may be formed from a difference in diameter between the reactor and the baffle of between 100μm and 150μm.

In some embodiments, the reaction vessel may be cylindrical and the baffle may be a substantially flat annular structure fixed centrally within it, and the gap may be formed from a difference in diameter between the reactor and the baffle of about 100μm.

In some embodiments, the reaction vessel may be cylindrical and the baffle may be a substantially flat annular structure fixed centrally within it, and the gap may be formed from a difference in diameter between the reactor and the baffle of about 150μm.

In some embodiments, the reaction vessel may be cylindrical and the baffle may be a substantially flat annular structure fixed centrally within it, and the gap may be formed from a difference in diameter between the reactor and the baffle of 100μm.

In some embodiments, the reaction vessel may be cylindrical and the baffle may be a substantially flat annular structure fixed centrally within it, and the gap may be formed from a difference in diameter between the reactor and the baffle of 150μm.

In some embodiments a baffle may comprise multiple openings (for example an opening configured to accommodate a rotating shaft as well as other regular or irregularly spaced openings permitting the flow of liquids and/or attachment to a support rod).

In some embodiments the interconnected mixing chambers may comprise a turbulence increasing structure.

In some embodiments a turbulence increasing structure may be a baffle (i.e. a baffle additional to those baffles which separate the agitators into interconnected mixing chambers).

In some embodiments a turbulence increasing structure may be a vertical baffle (for example a rib or spine extending outwards and running vertically from the walls of a reaction vessel within a mixing chamber).

In some embodiments a turbulence increasing structure may be a baffle which is arranged substantially perpendicularly (for example so that the longest dimension of each baffle is substantially perpendicular to the other) to the baffles separating the agitators into interconnected mixing chambers each enclosing an agitator.

In some embodiments a reaction vessel insert may comprise a spacer. Spacers can be placed within the insert structure to ensure that the interconnected mixing chambers created by its interaction with the reaction vessel align with other reactor elements such as an external heating jacket.

In some embodiments a reaction vessel insert may comprise a spacer at each of its ends (e.g. at its top and bottom for a vertically installed reactor).

In some embodiments a spacer may comprise indentations (for example slots) on a surface facing the reaction interior. These help maintain agitation of the reaction medium and minimise settlement of sediments that might clog the reactor.

In some embodiments a spacer may comprise a concave surface facing the reaction vessel interior (i.e. a surface where the centre of the surface is further away from the reaction vessel interior than the surface edges). Such an arrangement helps collect reaction fluid at the spacer region and direct it axially around the rotating shaft, improving mixing.

*Driving Means*

Any suitable driving means can be used to rotate the shaft and its attached agitators, including for example motors or pulley-and-belt systems.

In some embodiments the means to drive the rotating shaft may be a motor.

In some embodiments the means to drive the rotating shaft may be a motor which rotates the shaft at a speed of about 10 rpm to about 5000 rpm.

In some embodiments the means to drive the rotating shaft may be a motor which rotates the shaft at a speed of about 30 rpm to about 5000 rpm.

In some embodiments the means to drive the rotating shaft may be a motor which rotates the shaft at a speed of about 50 rpm to about 5000 rpm.

In some embodiments the means to drive the rotating shaft may be a motor which rotates the shaft at a speed of about 20 rpm to about 2000 rpm.

In some embodiments the means to drive the rotating shaft may be a motor which rotates the shaft at a speed of 20 rpm to 2000 rpm.

In some embodiments the means to drive the rotating shaft may be a motor which rotates the shaft at a speed of about 100 rpm to about 1500 rpm.

In some embodiments the means to drive the rotating shaft may be a motor which rotates the shaft at a speed of about 200 rpm, about 500 rpm, or about 1000 rpm.

In some embodiments the means to drive the rotating shaft may be coupled to the shaft magnetically or by using a rotating coupler, swivel joints or rotary union.

In some embodiments the means to drive the rotating shaft may be coupled to the shaft magnetically.

*Gas-Liquid and Liquid-Liquid Reactions*

Continuous flow reactors disclosed herein can advantageously be adapted to provide particular flexibility in liquid-liquid or gas-liquid reactions. For example, the rotating shaft (and optionally the agitators it bears), or a baffle support (for example a baffle support rod) can be engineered to deliver (for example to the reaction vessel interior) a gaseous or liquid reaction component, affording greater control over the course of a reaction. For example, during reactions that consume a large volume of gas (e.g. hydrogenation) the gaseous component could be sparged through the rotating shaft or a baffle support rod, allowing the gas-liquid ratio to be maintained in a narrower region along the reactor, improving reaction control and hence product quality.

In some embodiments a rotating shaft or support (for example a support rod) may be adapted to deliver a reaction component.

In some embodiments a rotating shaft may be adapted to deliver a reaction component.

In some embodiments a rotating shaft and at least one of the agitators it bears may be adapted to deliver a reaction component.

In some embodiments a rotating shaft and all of the agitators it bears may be adapted to deliver a reaction component.

In some embodiments a rotating shaft may enclose a static tube comprising an inlet and an outlet, and the shaft and/or the agitators it bears may be perforated to allow delivery (for example to the reaction vessel interior) of a reaction component passed through the static tube.

In some embodiments a rotating shaft may enclose a substantially parallel static tube (i.e. one not designed to rotate along with the shaft enclosing it) comprising an inlet and an outlet, and the shaft and/or impellers are perforated to allow delivery of a reaction component passed through the static tube.

In some embodiments a rotating shaft may be adapted to deliver a reaction component across substantially the entire length of the rotating shaft.

In some embodiments a support rod may be adapted to deliver a reaction component (for example, by being a stiff hollow tube comprising an inlet and an outlet).

In some embodiments a support rod may enclose a tube comprising an inlet and an outlet, the support rod being perforated to allow delivery of a reaction component passed through the static tube.

In some embodiments a support rod may enclose a substantially parallel tube comprising an inlet and an outlet, and be perforated to allow delivery of a reaction component passed through the static tube.

In some embodiments a support rod may be adapted to deliver a reaction component across substantially its entire length.

In some embodiments a support may comprise four support rods distributed equidistantly around a baffle's outer edge region, two of which (for example two opposing rods) have been adapted to deliver a reaction component.

*Immobilised Catalysts*

In the case of reactions involving solid components (such as catalysts, or seed crystals), baskets or similar structures containing the solid component may be placed into a reaction vessel, for example within some or all of a reactor's mixing chambers. This arrangement immobilises the solid component away from the impellers, eliminating mechanical damage. For catalytic reactions, this may provide superior catalyst lifetime a factor of 10-1000 times better than in conventional batch processes.

In some embodiments the interconnected mixing chambers may comprise a reagent basket.

In some embodiments the interconnected mixing chambers may comprise a reagent basket consisting essentially of stainless steel mesh.

In some embodiments the reagent basket may be removable.

In some embodiments the reagent basket may comprise a turbulence increasing structure.

As an alternative method of preventing solid catalysts interfering with reactor operation, an immobilised catalyst (e.g. an impregnated ceramic or foam, such as a carbon-open-cell structure foam) may be used.

In some embodiments the interconnected mixing chambers may comprise an immobilised catalyst.

*Specific Embodiments*

In one embodiment there is provided a continuous flow reactor comprising:

- A vertically-installed reaction vessel comprising an inlet at its bottom and an outlet at its top;
- A vertical rotating shaft bearing between 30 and 200 impellers per metre length of the shaft enclosed by the reaction vessel;
- Means to drive the rotating shaft; and
- A reaction vessel insert comprising a baffle attached to a support, the baffle comprising an opening permitting the flow of liquid through it;

The insert being removably fixed within the reactor such that in use the baffle is held substantially perpendicular to the shaft and separates the impellers into interconnected mixing chambers, while maintaining a gap between the outer edge of the baffle and the inner surface of the reaction vessel that facilitates removal of the insert but avoids excessive backmixing between the chambers.

In one embodiment there is provided a continuous flow reactor comprising:

- A vertically-installed reaction vessel comprising an inlet at its bottom and an outlet at its top;
- A vertical rotating shaft bearing between 30 and 200 impellers per metre length of the shaft enclosed by the reaction vessel;
- Means to drive the rotating shaft; and
- A reaction vessel insert comprising a baffle attached to a support, the baffle comprising an opening permitting the flow of liquid through it;

The insert being removably fixed within the reactor such that in use the baffle is held substantially perpendicular to the shaft and separates the impellers into interconnected mixing chambers, while maintaining a gap of between about $20\mu m$ and about $100\mu m$ between the outer edge of the baffle and the inner surface of the reaction vessel.

In one embodiment there is provided a continuous flow reactor comprising:

- A vertically-installed reaction vessel with a volume between 0.01L and 10000L comprising an inlet at its bottom and an outlet at its top;
- A central vertical rotating shaft bearing between 30 and 200 impellers per metre length of the shaft enclosed by the reaction vessel;
- A motor to drive the rotating shaft; and
- A reaction vessel insert comprising a baffle attached to a support, the baffle comprising an opening permitting the flow of liquid through it;

The insert being removably fixed within the reactor such that in use the baffle is held substantially perpendicular to the shaft and separates the impellers into interconnected mixing chambers, while maintaining a gap of between about $20\mu m$ and about $100\mu m$ between the outer edge of the baffle and the inner surface of the reaction vessel.

In one embodiment there is provided a continuous flow reactor comprising:

- A vertically-installed cylindrical reaction vessel with a volume between 0.01L and 10000L comprising an inlet at its bottom and an outlet at its top;
- A central vertical rotating shaft bearing between 30 and 200 impellers per metre length of the shaft enclosed by the reaction vessel;
- A motor to drive the rotating shaft; and
- A reaction vessel insert comprising a baffle attached to a support, the baffle comprising an opening permitting the flow of liquid through it;

The insert being removably fixed within the reactor such that in use the baffle is held substantially perpendicular to the shaft and separates the impellers into interconnected mixing chambers, while maintaining a gap of between about 20μm and about 100μm between the outer edge of the baffle and the inner surface of the reaction vessel.

In one embodiment there is provided a continuous flow reactor comprising:

- A tube with an end sealed using a flange arrangement with a volume between 0.01L and 10000L comprising an inlet at its bottom and an outlet at its top;
- A central vertical rotating shaft bearing between 30 and 200 impellers per metre length of the shaft enclosed by the reaction vessel;
- A motor to drive the rotating shaft; and
- A reaction vessel insert comprising a substantially flat, annular baffle attached to a support, the baffle comprising an opening permitting the flow of liquid through it;

The insert being removably fixed within the reactor such that in use the baffle is held substantially perpendicular to the shaft and separates the impellers into interconnected mixing chambers, while maintaining a gap of between about 20μm and about 100μm between the outer edge of the baffle and the inner surface of the reaction vessel.

In one embodiment there is provided a continuous flow reactor comprising:

- A tube with an end sealed using a flange arrangement with a volume between 0.01L and 10000L comprising an inlet at its bottom and an outlet at its top;
- A central vertical rotating shaft bearing between 30 and 200 impellers per metre length of the shaft enclosed by the reaction vessel;
- A motor to drive the rotating shaft; and
- A reaction vessel insert comprising a substantially flat, annular baffle attached to a support rod, the baffle comprising an opening permitting the flow of liquid through it;

The insert being removably fixed within the reactor such that in use the baffle is held substantially perpendicular to the shaft and separates the impellers into interconnected mixing chambers, while maintaining a gap of between about 20μm and about 100μm between the outer edge of the baffle and the inner surface of the reaction vessel.

In one embodiment there is provided a continuous flow reactor comprising:

- A vertically-installed tube with an end sealed using a flange arrangement, the tube having a volume between 0.01L and 10000L and comprising an inlet at its bottom and an outlet at its top;
- A central vertical rotating shaft bearing between 30 and 200 impellers per metre length of the shaft enclosed by the reaction vessel, the shaft being seated within a bushing;
- A motor to drive the rotating shaft; and
- A reaction vessel insert comprising a substantially flat, annular baffle attached to a support rod and a spacer at each of its ends, the baffle comprising a central opening through which the rotating shaft passes, the opening having a diameter which is about 120% of the diameter of the rotating shaft, permitting the flow of liquid through it;

The insert being removably fixed within the reactor such that in use the baffle is held substantially perpendicular to the shaft and separates the impellers into interconnected mixing chambers, while maintaining a gap of between about 30μm and about 75μm between the outer edge of the baffle and the inner surface of the reaction vessel.

In one embodiment there is provided a continuous flow reactor comprising:

- A vertically-installed tube with an end sealed using a flange arrangement, the tube having a volume between 0.01L and 10000L and comprising an inlet at its bottom and an outlet at its top;
- A central vertical rotating shaft bearing about 40 impellers per metre length of the shaft enclosed by the reaction vessel, the shaft being seated within a bushing;
- A motor to drive the rotating shaft; and

- A reaction vessel insert comprising a substantially flat, annular baffle attached to four support rods distributed equidistantly around a baffle's outer edge region, two of which have been adapted to deliver a reaction component, the baffle comprising a central opening through which the rotating shaft passes, the opening having a diameter which is about 120% of the diameter of the rotating shaft, permitting the flow of liquid through it;

The insert being removably fixed within the reactor such that in use the baffle is held substantially perpendicular to the shaft and separates the impellers into interconnected mixing chambers, while maintaining a gap of between about 30μm and about 75μm between the outer edge of the baffle and the inner surface of the reaction vessel.

In one embodiment there is provided a continuous flow reactor substantially as described in any of the Examples of the detailed description, or substantially as shown in any of the figures.

In one embodiment there is provided a continuous flow reactor as described in any of the Examples of the detailed description, or as shown in any of the figures.

*Continuous Flow Reactor Applications*

The reactors disclosed in this specification allow performance of the full spectrum of reactions (chemical or biochemical) currently carried out in batch reactors, including liquid-liquid, gas-liquid and solid-liquid reactions, crystallisation, and other processes.

In one embodiment, not part of the invention, there is provided the use of a continuous flow reactor comprising:

- A reaction vessel comprising an inlet and an outlet;
- A rotating shaft bearing at least two agitators enclosed by the reaction vessel;
- Means to drive the rotating shaft; and
- A reaction vessel insert comprising a baffle attached to a support, the baffle comprising an opening permitting the flow of liquid through it;

The insert being removably fixed within the reactor such that in use a baffle separates the agitators into interconnected mixing chambers each enclosing an agitator, while maintaining a gap between the outer edge of the baffle and the inner surface of the reaction vessel that allows the insert to be removed but avoids excessive backmixing between the chambers; to carry out a reaction.

In some embodiments the reaction may be selected from a liquid/liquid, gas/liquid, liquid/solid, gas/gas, gas/solid, and a gas/solid/liquid reaction.

In some embodiments the reaction may be a liquid/liquid reaction selected from a polymerisation reaction (for example the free radical polymerisation of polystyrene), Baeyer-Villager oxidation (for example a biocatalytic Baeyer-Villager oxidation) and Fischer esterification.

In some embodiments the reaction may be a hydrogenation reaction.

FIGURES

Figure 1: Cross-sectional view of a continuous flow reactor according to the invention.
Figure 2: Plan view of baffle 10.
Figure 3: Isometric cut-away view of the modified continuous flow reactor of Figure 1.
Figure 4: Cross-sectional view of the reaction vessel insert from Figure 3, showing the parallel support rods flanking the central rotating shaft.
Figure 5: Isometric view of the reaction vessel insert shown in Figure 4.
Figure 6: Detailed cross-sectional view of rotating shaft 6 adapted for gas or liquid delivery.
Figure 7: Cross-sectional view of a removable catalyst basket.
Figure 8: Isometric cut-away view of an alternative continuous flow reactor embodying the invention.
Figure 9: Isometric view of the reaction vessel insert used in the reactor of Figure 8.
Figure 10: Exploded view of the upper end of the reaction vessel insert shown in Figure 9.
Figure 11: Exploded view of the lower end of the reaction vessel insert shown in Figure 10.
Figure 12: Enhanced detail of the reactor of Figure 8, showing the gap between the baffle outer edges and reaction vessel inner surface.
Figure 13: Schematic diagram for the residence time distribution ("RTD") experiments.
Figure 14: Schematic diagram for the oxygen mass transfer experiments.
Figure 15: Signal emitted by the dye detector for different tracer concentrations.

Figure 16: Residence time distribution without baffles at a liquid flow rate of 300 mL min$^{-1}$ and impeller rotation speed 650 min$^{-1}$.

Figure 17: Smoothed residence time distribution without baffles at a liquid flow rate of 300 mL min$^{-1}$ and impeller rotation speed 650 min$^{-1}$ .

Figure 18: Residence time distribution with and without baffles at a liquid flow rate of 300 mL min$^{-1}$ and impeller rotation speed 650 min$^{-1}$.

Figure 19: Gas-Liquid Mass transfer ($k_L a$) for different mixing rates and different gas flow rate (a) at a liquid flow rate of 200 mL min$^{-1}$ and (b) at a liquid flow rate of 500 mL min$^{-1}$. Horizontal dashed lines indicate the $k_L a$ values achieved by the reactor packed randomly with glass beads and the bubble column.

Figure 20: Solid-liquid mass transfer ($k_S a_S$) for different mixing rates and different liquid flow rate.

Figure 21: Calculated power number of eight Rushton impellers across different Reynolds numbers.

## DETAILED DESCRIPTION

*Example 1: Continuous Flow Reactors*

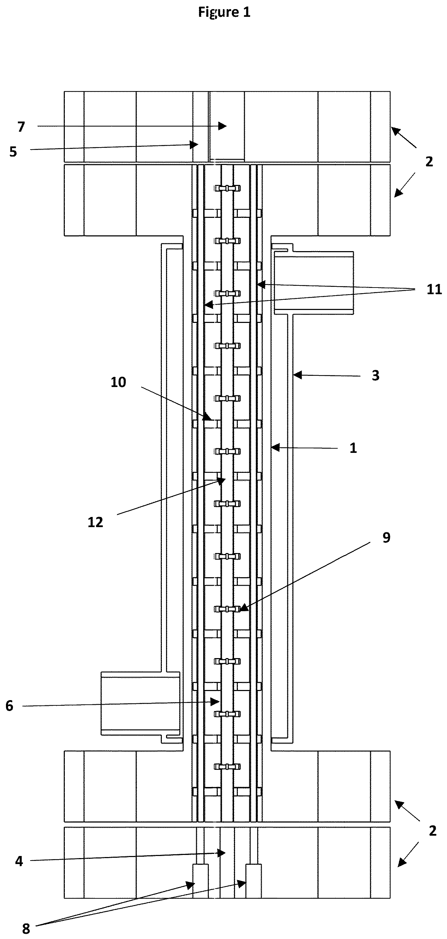

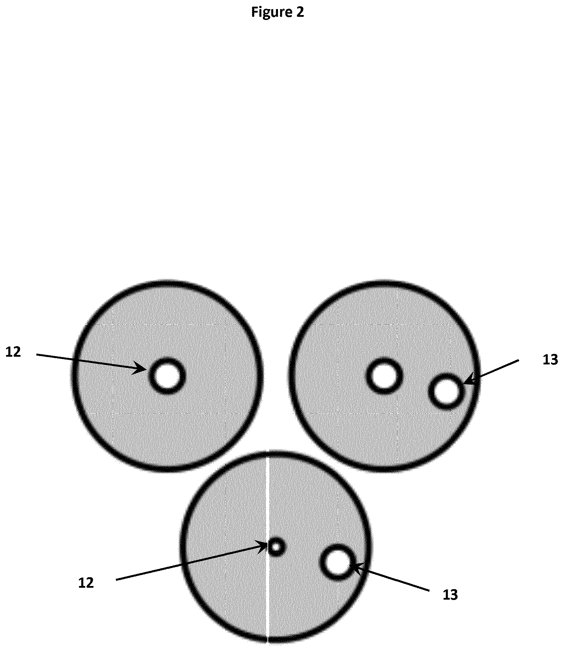

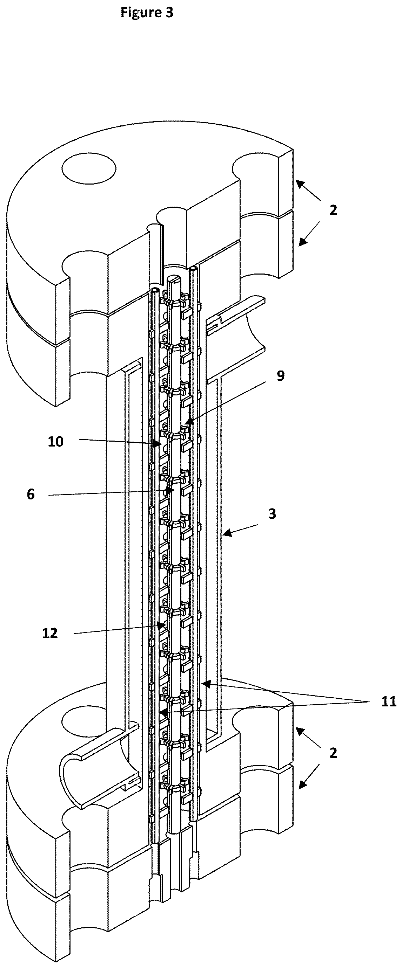

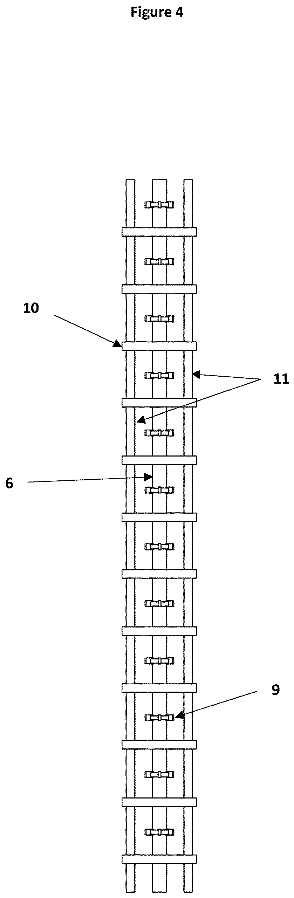

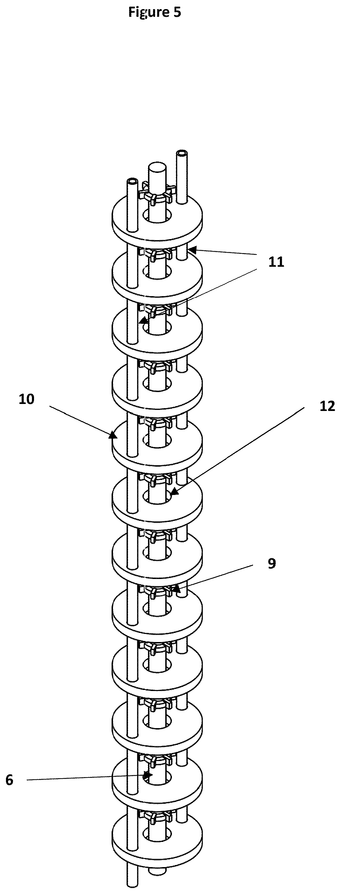

An example continuous flow reactor embodying the invention is pictured in Figure 1, with different angles and close ups of elements and groups of elements shown in Figures 2, 3, 4 and 5.

The reactor comprises a vertically-installed cylindrical reactor tube 1 constructed from stainless steel. The open ends of tube 1 are sealed using flanges 2, which are used to provide a good seal and enable the reaction vessel to contain high internal pressures. An oil/heating jacket 3 is employed to give control over a reaction's thermal parameters, and the reaction vessel is provided with an inlet 4 through which reactants and reagents can be introduced, and an outlet 5 through which reaction products can be collected.

A central rotating shaft 6 runs vertically upwards through the installed reactor. The shaft is coupled to a magnetic drive housed above region 7 to provide a leak-free linkage to a motor 7a or other suitable driving device (not shown). Depending on the length and shaft properties, additional supports such as bearings (not shown) can be used to reduce vibration of both the shaft itself and/or any impellers (or other agitating means) attached to it. Additional inlets 8 may be present, and placed so that they can be used to deliver a reaction component to a suitable configured support rod (see Example 2).

Rushton impellers 9 are fixed along the central shaft at regular intervals. The number of impellers can vary from 2 to 100 depending on the length of the reactor and desired reaction parameters. The type of impeller used (Rushton, pitch blade etc.) can be selected depending on the desired mixing characteristics. Impellers may also be replaced by other agitators or turbulence generating structures such as turbines. In the vertically-installed reactor of Figure 1, the impeller blades extend from the central shaft in a substantially perpendicular fashion.

Baffles 10 are fixed consecutively between each impeller and separate the internal reaction vessel space into a series of interconnected mixing chambers each containing a single impeller. For convenience, the baffles are attached to support rods 11 which are installed in parallel to rotating shaft 6, one support rod on each flank. This allows easy removal of the baffles for cleaning and maintenance.

Figure 2 shows that the baffles have a flat annular or disk-like structure whose diameter is such that the outer edges of the baffle can extend across the corresponding diameter of the reaction vessel leaving a small gap (e.g. of about 20-100$\mu$m) between the outer edge of the baffle and the reaction vessel interior wall. The baffles comprise a central opening 12 which accommodates shaft 6, optionally loosely enough to additionally permit flow of the reaction liquid through the apparatus. Opening 12 may be varied in diameter according to the specific reaction residence times required, and other openings 13 may also be introduced to the baffle structure to give further control over the passage of solvents.

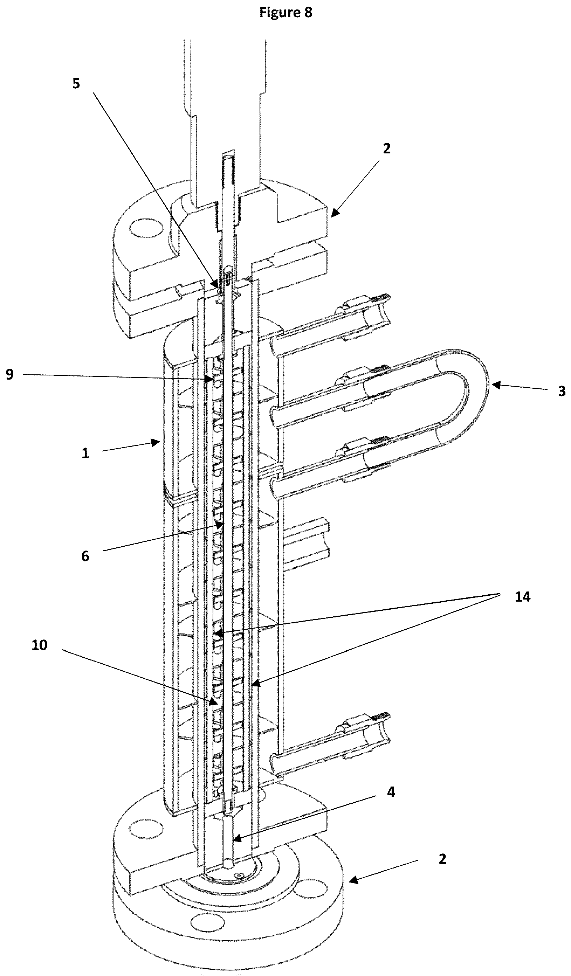

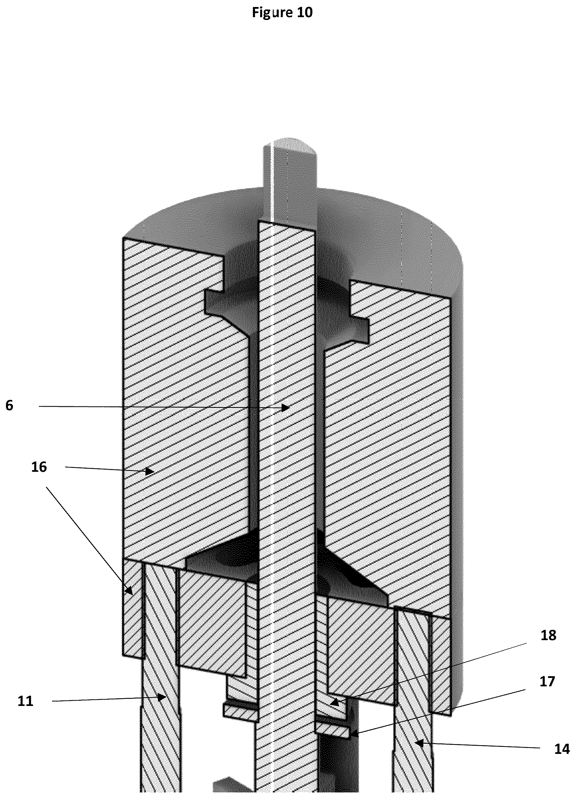

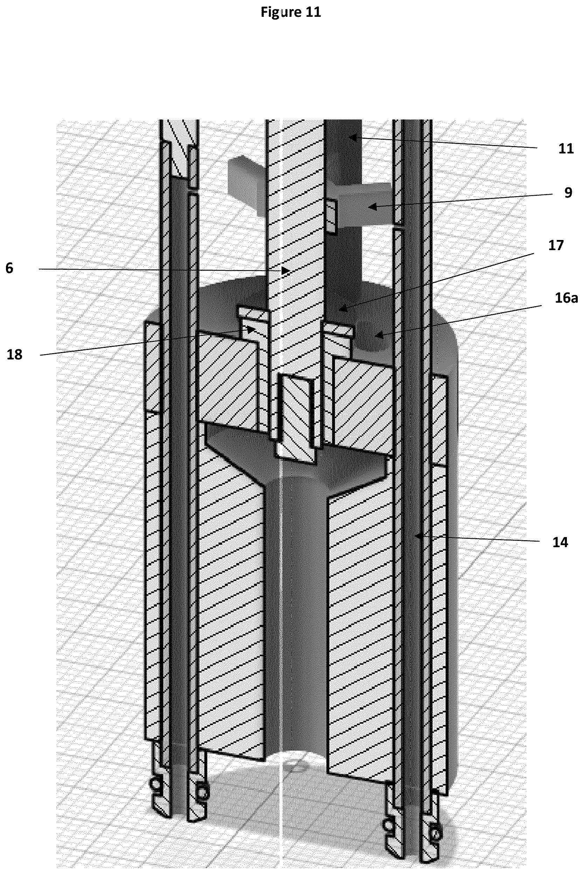

Additional features are shown in the reactor variant depicted in Figures 8 to 12. The reactor comprises cylindrical reactor tube 1 made from stainless steel. Although a variety of dimensions can be used, the internal diameter of the tube is 26mm, making it suitable for pilot scale reactions. The reactor tube is capped with custom flanges 2, the top accommodating a magnetic drive and an outlet port 5, and the bottom an inlet port 4. The reactor houses removable reaction vessel insert 15, which has spacers 16 at each of its terminals, offsetting the position of baffles 10 and aligning them with heating jacket 3. In the example shown, the spacer comprises a two-part structure, with the part facing the reaction interior engineered to received components and provide stability. Indentations 16a are present in the concave surface of the spacer, with these features aiding mixing.

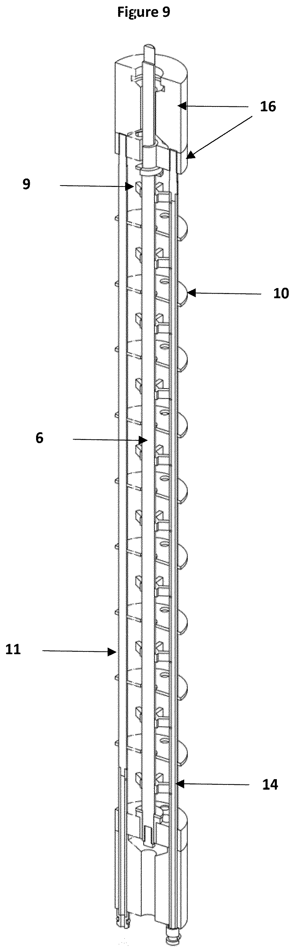

A close up of insert 15 is shown in Figure 9. It comprises a series of 9 baffles stacked equidistantly along four rods acting as a support, arranged around and passing through each of the baffle's "poles". Two of the opposing hollow support rods are engineered into feeding pipes 14 to allow passage of a liquid or gas material into a reaction, for example by having one or more holes drilled into the rod surface. These "feeding tubes" are aligned with additional inlet/outlet ports in the reactor structure. The other two support rods are not so engineered and therefore only perform the role of supporting the baffles by means of a welded joint, allowing them to divide the reaction vessel interior into 10 interconnected mixing chambers.

In this particular variant, rotating shaft 6 forms part of the removable insert, running centrally through apertures in baffles 10. Figures 9-11 show that at each shaft terminal are disks 17 that rest against bushings 18, which are in turn accommodated by bushing holders 19 engineered into spacers 16. This arrangement allows easy removal of all of the internal components of the reactor from the reaction vessel, making maintenance (or modification) far easier.

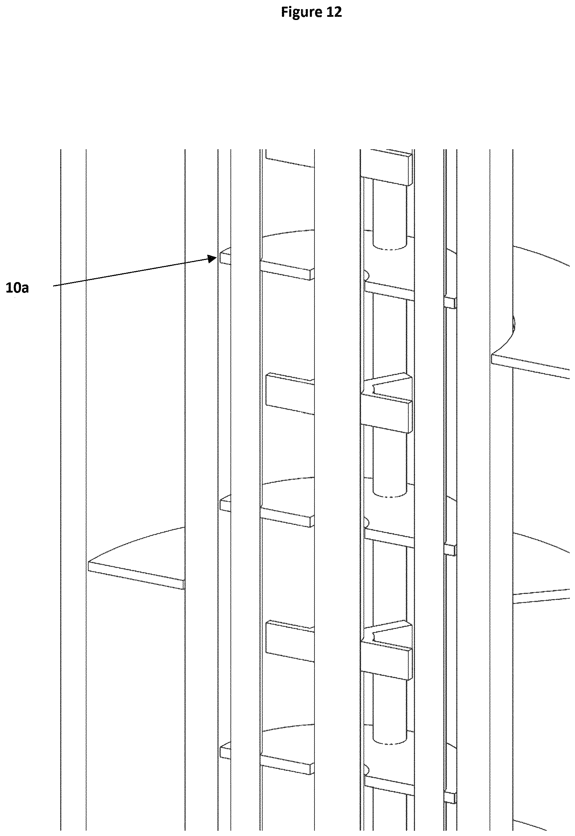

Figure 12 shows that when the insert is removably attached to the reactor interior (not shown), there is a gap 10a between the outer edge of the baffles and the reaction vessel interior.

A further variant of the reactors shown in the figures may comprise several impeller shafts each bearing multiple impellers separated by baffles. In an example of such a variant, the impeller shafts may pass vertically upwards through the reaction vessel as described in Figure 1, with multiple shafts distributed evenly across the horizontal width of the reactor tube. Rotating shaft groups may be arranged such that their overall grouping is still overall placed centrally with respect to the reaction vessel volume.

*Example 2: Continuous Flow Reactor Operation*

During use of the reactor shown in Figure 1, reactants are introduced to inlet 4 and flow upwards from the bottom of the reactor (an "up flow" configuration), where they are mixed by the rotating impellers 9 and react to form product before exiting the reactor at outlet 5. For some reactions other flow orientations (such as down flow or horizontal flow) may be preferred. In such cases, the reactor can be installed horizontally rather than vertically (such that the longest length of the rotating shaft extends horizontally and the shaft rotates around its horizontal axis), and/or the positions of the inlet 4 and outlet 5 chosen differently (for example, for a "downflow" configuration the same vertical installation of the reactor could be used but the inlet 4 could be placed on the top and the outlet 5 on the bottom of the reaction vessel).

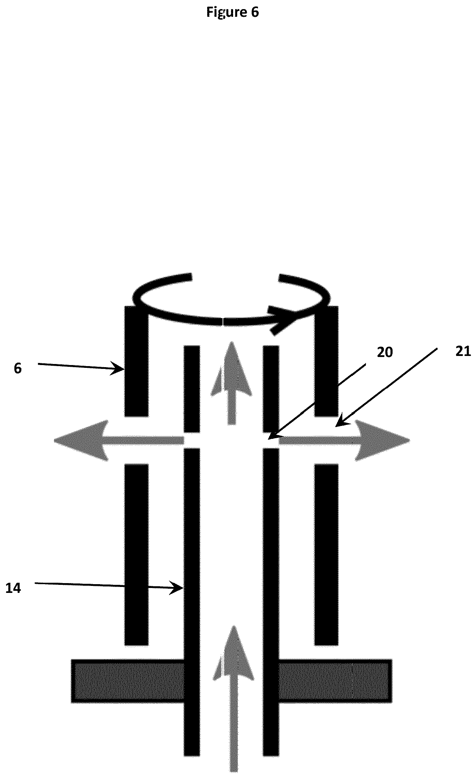

For two phase reactions involving liquids and gases, suitable reactants may be added along the reactor length. A typical example is introduction of a liquid from the bottom inlet 4 while a gas may be injected along the central shaft 6 and through the rotating impellers 9, or through the vertical support tubes 13. The former configuration is shown in more detail in Figure 6, which shows a cut-away view of an adapted shaft; but a similar arrangement can be used when the support tube(s) 13 are used to deliver a component, *via* additional inlets 8.

In Figure 6, a static tube 14 engineered with perforations 20 runs internally to the rotating shaft to provide gas flow along its length. The shaft and/or impellers are similarly engineered with perforations 21 to allow passage of the reactant to the reaction vessel interior. The diameter of the perforations 20 and 21 can be altered along the tube in order to provide even delivery throughout the reactor at low gas flow rates and pressure. Although described for a gas-liquid process, this approach could also be useful for difficult liquid-liquid reactions where one fluid may enter from the bottom and the other be distributed along the reactor to (for example) manage reaction heat or formation of gas.

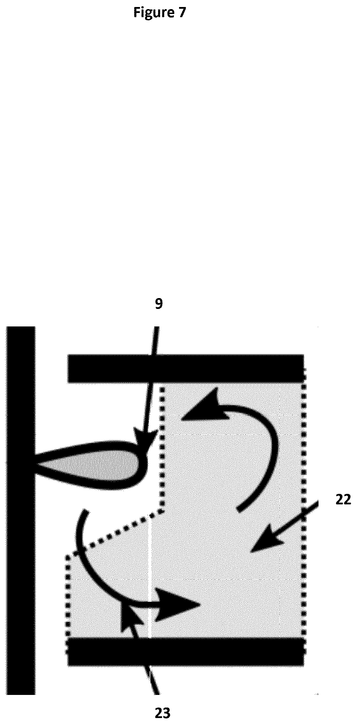

When carrying out catalytic reactions, catalysts can be provided to the continuous flow reactor as a suspended slurry. Alternatively, catalyst may be supported in stainless steel mesh baskets 22 which surround the impellers 9, as shown in Figure 7. This directs the fluid in defined flow patterns 23 through the catalyst, allowing for superior mass and heat transfer.

*Example 3: Continuous Flow Reactor Properties*

To show the utility of the continuous flow reactors of this specification a series of experiments were performed. For each test, a reactor was constructed according to in the form of an acrylic tube 24 with an internal diameter of T=64 mm and a length of L=300 mm, the ends of which were sealed using flanges. Eight Rushton impellers 9 with an impeller diameter of D=25.6 mm (D/T=0.4) were spaced evenly along the central rotating shaft of the reactor. The distance between each impeller was $\Delta$C=32 mm ($\Delta$C/D=1.25). In general, tests were performed in a control model without baffles, and compared to a reactor comprising horizontally arranged baffles equally spaced across the whole of the reactor height, with the distance between baffles was equal to $\Delta$C. Each baffle had a thickness of 2 mm. An electric motor was used to rotate the central shaft around a 6 mm rotation axis at 500 to 1500 revolutions per minute (rpm), rotating the impellers in turn. All experiments were conducted under ambient conditions.

*Example 3a: Residence Time Distribution and Determination of the Number of Continuous Stirred Tank Reactors in Series*

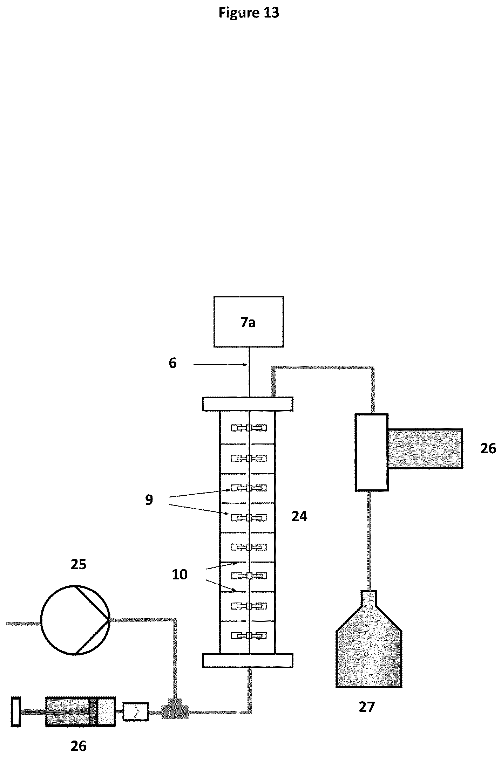

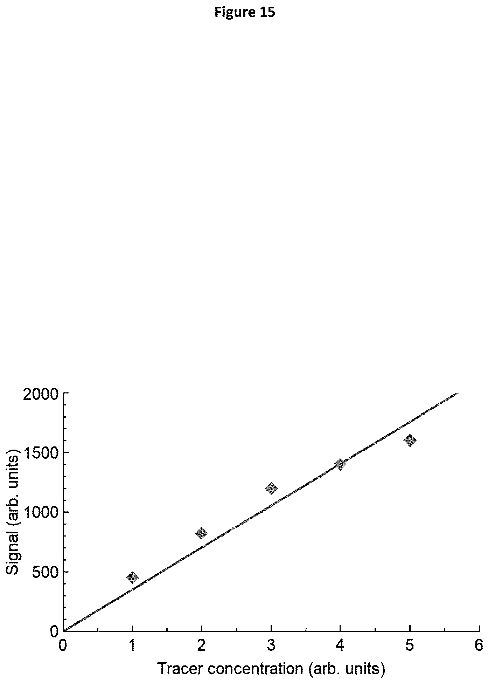

As shown in Figure 13, water 25 was pumped through the reactor with a Knauer 80P pump at 100 to 300 ($\pm$2%) mL min$^{-1}$. A stirring rate of 200 rpm was used. The liquid was mixed with fluorescent dye (fluorescein) with a syringe pump 26 (World Precision Instruments, AL-1010) at 0.3 mL min$^{-1}$. A dye detector 27, containing a laser and detectors with light filter, continuously monitored the fluorescent dye concentration in the liquid phase at the reactor outlet, which passed in turn to liquid waste 28. The response was determined to be linear for a wide range of tracer concentrations (Figure 15).

The residence time distribution density, E(t), was calculated as follows:

$$E(t) = \frac{C_I(t)}{\int_0^\infty C_I(t)dt}$$

where $C_I(t)$ is the tracer concentration over time. The residence time distribution (RTD) of n continuously stirred tank reactors CSTRs in cascade was also determined by combining the RTD of the CSTR n times itself [Toson P., Doshi P., Jajcevic D.; Processes 7, 2019]. MacMullin and Weber [MacMullin R., Weber M.; Trans. Am. Inst. Chem. Eng. 31, 1935, 409] were the first to propose the function for n CSTRs in connected in series:

$$E(t) = \left(\frac{N}{\bar{t}}\right)^N t^{N-1} \frac{exp\left(-\frac{Nt}{\bar{t}}\right)}{(N-1)!}$$

where N is the number of CSTR and $\bar{t}$ is the mean residence time.

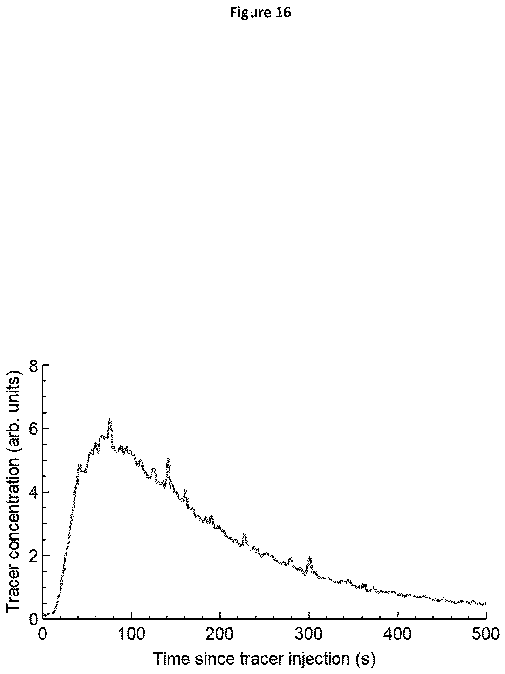

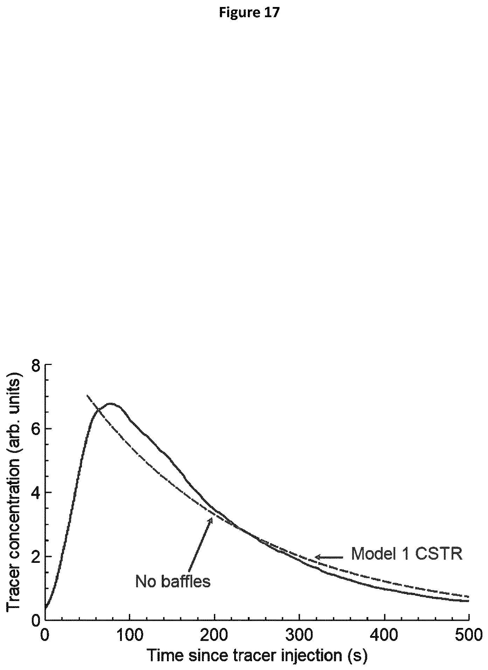

First, the RTD in the reactor without baffles was measured and used as a reference experiment. It can be seen in Figure 16 that the data obtained contains noise and is ascribed to the presence of gas bubbles in the fluid stream. In order to remove the noise, a moving average was applied to the data (Figure 17).

In Figures 16 and 17, it can be observed that a fraction of the tracer molecule flows instantly out of the reactor without baffles. After the peak at *ca.* 70, the tracer concentration decreases following an exponential decay. This type of a curve is typical for a CSTR: the smaller the concentration of the tracer left in the reactor, the longer it takes for this fraction to flow out. As a result, the residence time distribution is broad resulting in poorly controllable continuous processes. Indeed, some molecules spend little time in the reactor, as they pass immediately through the system, whereas others spend longer times.

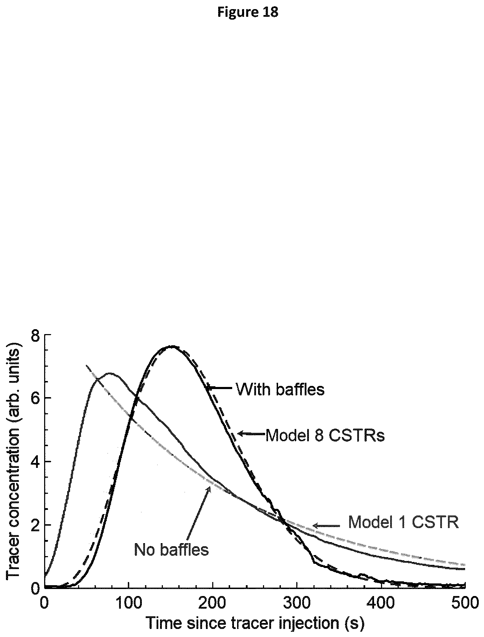

The same experiment was then performed with baffles separating the impellers into interconnected mixing chambers according to the present specification. Figure 18 shows that the addition of baffles to the control apparatus results in a narrowing of the distribution, as well as shifting the peak to 150 s. This means that the baffles allow more effective control of the residence time of the elements passing through the reactor, in turn improving reaction control and timing. The experimental residence time distribution of the multiple impeller/baffle system accurately matched the theoretical model of 8 ideal CSTRs connected in series, despite the marked improvement in structural simplicity. Even further improvements in residence were observed for the reactor shown in Figures 8 to 12, with the system matching around 30 ideal CSTRs connected in series (i.e. 3 CSTRs in series for each "real" mixing chamber in the reactor).

*Example 3b: Oxygen Mass Transfer Experiments and Determination of the Gas-liquid Mass Transfer Coefficient*

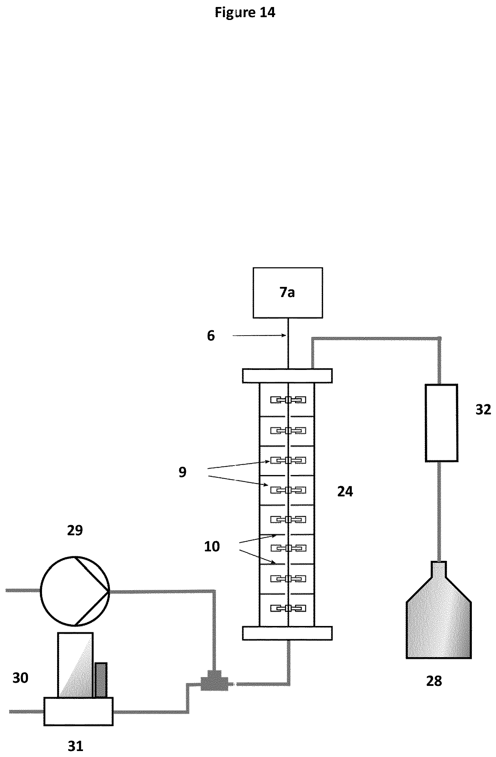

Mass transfer experiments were carried out according to the basic scheme outlined in Figure 14. Deoxygenated water 29 was pumped at 200 to 500 ($\pm$2%) mL min$^{-1}$ through the reactor. Air 30 was introduced into the inlet of the reaction and the flow rate was controlled using a Bronkhorst mass-flow controller 31 at 100 to 200 ($\pm$ 0.2 %) mL min$^{-1}$. The oxygen concentration in the liquid phase was measured continuously with a (PyroScience, PICO$_2$) oxygen probe 32 at the reactor inlet ($\pm$0.02% accuracy). The oxygen probe was calibrated with air (21% O$_2$) at ambient temperature.

Gas-Liquid mass transfer measurements were also measured in a bubble column and packed bed reactor (PBR) configuration. To turn the reactor into a bubble column, the baffles and the impellers were removed. The baffles and impellers were also removed for the PBR configuration, and the empty reactor tube was filled with spherical glass beads with a diameter of 3 mm. The length of the packed bed was 100 mm.

For a physical absorption in a continuous flow, the overall O$_2$ mass flow rate absorbed $\Phi\Phi_{O_2}$ was calculated using the following equation:

$$\Phi_{O_2} = \frac{Q_L dC_{O_2}}{S_c dZ} = k_L a\left(C_{O_2}^* - C_{O_2}\right)$$

where $Q_L$ is the liquid flow rate, $S_c$ is the reactor cross section, $\frac{dC_{O_2}}{dZ}$ is the oxygen concentration variation over the reactor length, $k_L$ is the local gas-liquid mass transfer coefficient, a is the effective interfacial area of gas bubble, $\frac{dC_{O_2}}{dZ}$ the solubility of O$_2$ in the liquid phase and $C_{O_2}$ is the oxygen concentration in the liquid phase. By integrating the equation along the reactor height and isolating the $k_L$ a value, the gas-liquid mass transfer coefficient was determined as follows:

$$k_L a = \frac{Q_L}{L_{reac} S_C} ln \left( \frac{C_{O_2}^* - C_{O_2}^{in}}{C_{O_2}^* - C_{O_2}^{out}} \right)$$

where $L_{reac}$ is the reactor length, $C_{O_2}^{in}$ and $C_{O_2}^{out}$ are respectively the oxygen concentration in the liquid phase at the reactor inlet and outlet. The oxygen solubility was determined with the Winkler table [Montgomery, H.A.C.; Thom, N.S.; Cockburn, A.; J. Appl. Chem. 14, 1964, 280], which has been shown to be suitable for oxygen analysis [Carpenter, H.; Limnol. Oceanogr. 10, 1965, 135].

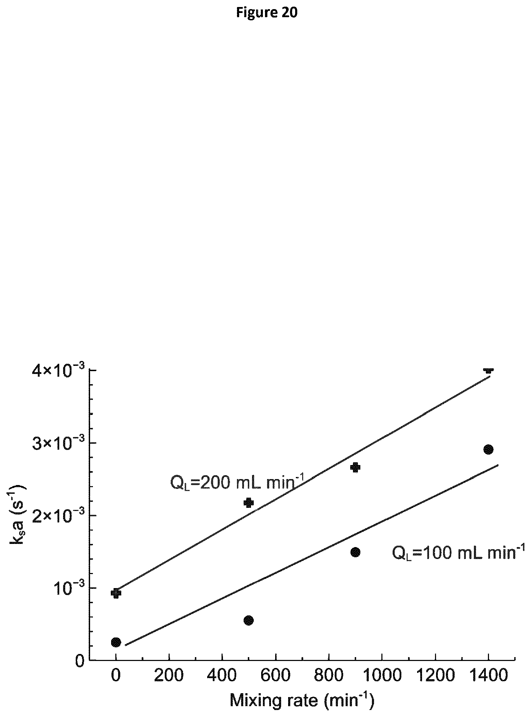

The gas-liquid mass transfer coefficient, $k_L a$, was measured and compared for different configurations: with baffles, without baffles, as a bubble column and a PBR. For the PBR configuration $L_{reac}$ was equal to 100 mm. The results for various mixing, gas and liquid flow rates are shown in Figure 20.

Firstly, it can be seen that by increasing the mixing rate, i.e. the speed of the impellers, the mass transfer was increased at both flow rates and for with and without baffles. Mass transfer was also improved in every experiment using higher gas flow rates and higher liquid flow rates. Comparing the difference between the use of baffles and without baffles, it is clear the system with baffle offers a greater $k_L a$ value compared to without baffles. This difference is even more noticeable at high mixing and liquid flow rates. The vertical baffles control the RTD more effectively by maintaining more molecules in the reactor, as seen above. Therefore, the gas and the liquid remain in contact for a longer amount of time, thus increasing the performance of the reactor.

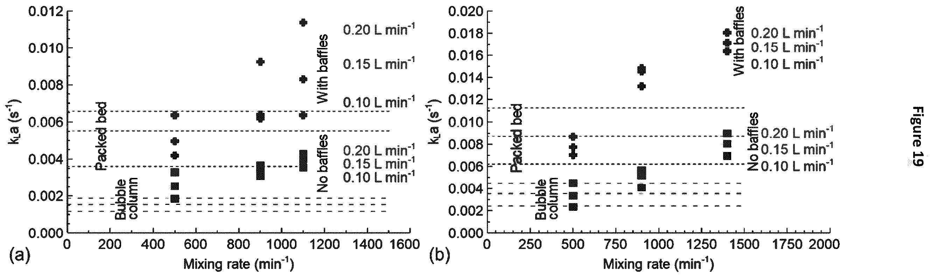

The graph also displays the mass transfer for a bubble column and a PBR. As there is no mixing for those systems, the $k_L a$ values are represented by dashed horizontal lines in the wide mixing range to compare with the others configuration involving mixing. As shown in Figure 19, the mass transfer is much greater with the baffle even at low impeller speeds. The rotary motion of the impeller reduces the gas bubble size, increasing the interfacial area and thus the mass transfer. Furthermore, compared to the bubble column arrangement, the baffled arrangement imparts a greater gas hold-up time which also increases mass transfer in the baffled reactor.

Finally, the continuously stirred baffle reactor outperformed the PBR when the impeller speed reached approximately 1000 rpm. Hence, high mass transfer rates ($k_L a$) can be achieved by simply increasing the rotational speed of the impellers.

*Example 3b: Benzoic Acid Mass Transfer Experiments and Determination Solid-liquid Mass Transfer Coefficient.*

For this experiment, the baffles were removed and only one Rushton impeller was used. The impeller was surrounded by a basket with a height of 32 mm and an internal mesh arrangement that protected the solid particles therein from the rotating impeller.

Water was pumped through the continuous flow reactor at 100 to 500 ($\pm$2%) mL min$^{-1}$. Benzoic acid (Sigma-Aldrich, >99.5%), in pellet form (5 mm in diameter and 10 mm in length) was placed in the basket. Samples were collected from the reactor outlet and the benzoic acid concentration in the liquid was measured with a Gas Chromatograph (GC).

The overall Benzoic Acid (BA) mass flow rate absorbed $\Phi_{BA}$ was calculated as follows:

$$\Phi_{BA} = \frac{Q_L dC_{BA}}{S_c dZ} = k_s a_s (C_{BA}^* - C_{BA})$$

where $k_S$ is the local solid-liquid mass transfer coefficient, $a_S$ is the effective interfacial area of the solid particle, $C_{BA}^*$ the solubility of benzoic acid in the liquid phase and $C_{BA}$ is the benzoic acid concentration in the liquid phase. The solid-liquid mass transfer coefficient was then determined by integrating the preceding equation along the basket height:

$$k_S a_S = \frac{Q_L}{L_{basket} S_C} ln \left( \frac{C_{BA}^* - C_{BA}^{in}}{C_{BA}^* - C_{BA}^{out}} \right)$$

where $L_{basket}$ is the length of the basket, $C_{BA}^{in}$ and $C_{BA}^{out}$ are respectively the benzoic acid concentration in the liquid phase at the reactor inlet and outlet. The benzoic acid solubility was taken from Swarbrick and Carless [Swarbrick J.; Carless, J.E.; J. Pharm. Pharmacol. 16, 1964, 596].

Figure 19 compares the solid-liquid mass transfer coefficient $k_S a_S$ for different mixing, gas flow, and liquid flow rates. It can be seen that increasing mixing rate improves the liquid velocity in the reactor, enhancing the $k_S a_S$ value and improving the solid-liquid mass transfer. Indeed, at the liquid flow rate (QL) of 200 mL min$^{-1}$, the solid-liquid mass transfer almost doubled compared to QL=100 mL min$^{-1}$. The results demonstrate the possibility of using baskets with solid materials in the continuous flow reactor. The solid-liquid mass transfer rate was positively correlated to impeller rotation speeds, this demonstrates that the continuously stirred baffle reactor decouples mass transfer from fluid viscous forces by varying impeller rotation speeds.

*Example 3c: Determination of Impeller Power Number*

The overall power consumption of eight Rushton impellers was determined by subtracting the measured power consumption of impellers rotating in water from the power consumption rotating in air for a specific rotation speed. Afterwards, the power number, Np, was determined with the following equation:

$$N_p = \frac{P}{\rho N^3 D^5}$$

where P is the power consumption, $\rho$ is the density, N is the rotation speed and D is the impeller diameter. The power number is used to determine the power consumption, considering the impeller geometry.

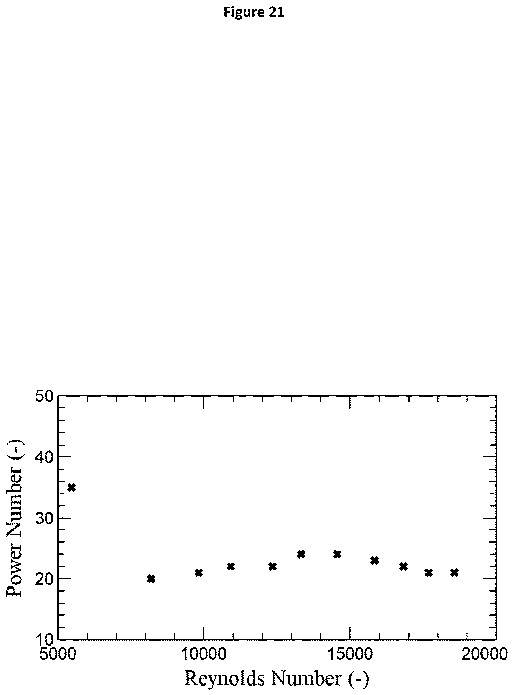

Figure 21 shows the calculated power number of eight Rushton impellers across different Reynolds numbers. It can be seen that for Reynolds numbers greater than 8000, the power number is on average ca. 23. In the model system described above, there are eight Rushton impellers, therefore each impeller has an approximate power number of between 2 and 3. This is surprisingly much lower than the typical power number for a Rushton impeller which is generally between 4 and 6 (Chapple D. et al., Chem. Eng. Res. Des. 80, 2002, 364; Jaszczur M. et al., Energies 13, 2020; Nouri R. M. et al., J. Chem. Eng. Japan 31, 1998, 848; Furukawa, H. et al., J. Chem. Eng., 2012; Jafari, R. "Solid Suspension and Gas Dispersion in Mechanically Agitated Vessels", 2010. Hence, the overall power consumption in this system is substantially lower for the same overall performance, and the energy consumption on mixing may be 30-55% lower compared to conventional reactors.

*Example 4: Effect of Gap on Insert Removal and Backmixing*

As already mentioned, the reactors described in the present specification comprise a gap between the outer edges of a reaction insert's baffles and the reaction vessel's interior wall, making the insert more easily removable for maintenance or modification (and insertable thereafter). Table 1 shows the approximate insertion force (measured using an FSS015WNGX Honeywell Load Cell calibrated against known weights) required for inserts with varying gap distances in the example reactor described in figures 8-11 and constructed using a 24 cm long, 26mm internal diameter reaction vessel and an insert comprising 9 baffles 1 mm thick.

*Table 1: Effect of Reactor Insert Gap on Insertion Force*

| Gap Size (= distance between outer edge of the inner surface of the vessel, $\mu$m) | Approximate Insertion Force |
|---|---|
| 10 | >> 1Kg (Damage Caused) |
| 20 | 0.5Kg |
| 35 | 0.1Kg |
| 60 | 0.05Kg |
| 90 | Negligible |
| 125 | Negligible |
| 200 | Negligible |
| 300 | Negligible |

It can be seen that a relatively small gap increases the ease by which the support/spacer/baffle construct dramatically: a 10$\mu$m gap insertion caused major damage to the insert, but 20$\mu$m results in a reasonably workable insertion (and by analogy removal) force.

As already noted, allowing gaps between internal structures such as baffles and a reaction vessel's interior wall is known to cause backmixing. To see the effects in the reactors of the present specification, tests were carried out according to the method of example 3b on the example reactor described in figures 8-12, constructed using a 24cm long, 26mm internal diameter reaction vessel and featuring an insert hosting 9 baffles 1 mm thick. A control with 0 gap size was prepared by applying heated viscous paraffin onto the 20 $\mu$m gaps to seal them completely when cooled.

*Table 2: Effect of Reactor Insert Gap on Backmixing*

| Gap Size (= distance between outer edge of the inner the baffle and surface of the vessel, $\mu$m) reaction | Number of Ideal Stirred Tanks in Series |
|---|---|
| 0 | 27 |
| 20 | 27 |
| 35 | 25 |
| 90 | 14 |
| 200 | 6.7 |
| 250 | 2.3 |

The results show the number of ideal stirred tanks that would be needed to replicate the same performance as the reactor of the specification, with a higher number representing a better performance in terms of reaction residence time control. Reactor performance can be seen to substantially deteriorate as the size of the gap increases, due to unwanted backmixing. However, despite teaching to the contrary in the art, small gaps appear to be reasonably well-tolerated and do not unduly reduce reaction control.

*Conclusions*

The experimental data above show that the continuous flow reactors disclosed herein have several advantages compared to earlier alternatives. Using baffles to create multiple mixing chambers each enclosing an agitator leads to a more uniform flow and a narrower residence time distribution compared to a control "CSTR" system without baffles, improving reaction control. Furthermore, the RTD curve for a system comprising 9 baffles (10 mixing chambers) accurately matches the theoretically calculated RTD curve of up to 30 ideal CSTRs in sequence. This shows that the RTD of the instant reactor can be conveniently controlled in relation to the number of CSTRs required by changing the number of baffles.

The gas-liquid mass transfer results show the advantage of the mixing impellers for increasing mass transfer ($k_L a$) rates compared to typical packed bed reactors and bubble columns with no mixing. These results also show that having baffles significantly increases the gas-liquid mass transfer compared to a control system lacking them or the mixing chambers they provide. The solid-liquid mass transfer experiment further compounds the advantage of the use of impellers at low and medium liquid flow rates. Indeed, in the reactors of the present specification, the overall power consumption is significantly less than expected for a given number of impellers, leading to improved efficiency.

Finally, it can be seen that the removable nature of the insert and the gap maintained between the outer edge of the insert baffles contributes to the reactor being easy to clean and maintain, while avoiding excessive backmixing and a concomitant loss of reaction control.

**Claims**

1. A continuous flow reactor comprising:

   - A reaction vessel (1) comprising an inlet (4) and an outlet (5);
   - A rotating shaft (6) bearing at least two agitators (9) enclosed by the reaction vessel (1);
   - Means to drive the rotating shaft (7a); and
   - A reaction vessel insert (15) comprising a baffle (10) attached to a support (11), the baffle (10) comprising an opening (12) permitting the flow of liquid through it;

   The insert (15) being removably fixed within the reactor such that in use a baffle (10) separates the agitators (9) into interconnected mixing chambers each enclosing an agitator (9), while maintaining a gap between 20$\mu$m and 100$\mu$m in size between the outer edge of the baffle (10) and the inner surface of the reaction vessel (1) that allows the insert to be removed more easily for cleaning.

**2.** A continuous flow reactor as claimed in claim 1 where the gap is between $30\mu m$ and $75\mu m$ in size.

**3.** A continuous flow reactor as claimed in claim 2 or claim 2 where the reaction vessel (1) is cylindrical and has a length to diameter ratio between 1:1 and 100:1.

**4.** A continuous flow reactor as claimed in any of the preceding claims where the inlet (4) and outlet (5) are positioned at opposite ends of the reaction vessel.

**5.** A continuous flow reactor as claimed in any of the preceding claims comprising multiple rotating shafts (6) each bearing at least two agitators.

**6.** A continuous flow reactor as claimed in any of the preceding claims where a rotating shaft (6) is positioned substantially centrally with respect to the reaction vessel.

**7.** A continuous flow reactor as claimed in any of the preceding claims comprising between 30 and 200 agitators (9) per metre length of the rotating shaft (6).

**8.** A continuous flow reactor as claimed in any of the preceding claims where the agitators (9) are substantially perpendicular to the longest axis of the rotating shaft (6).

**9.** A continuous flow reactor as claimed in any of the preceding claims where the agitator (9) is an impeller or a turbine.

**10.** A continuous flow reactor as claimed in any of the preceding claims where the support (11) comprises a support rod.

**11.** A continuous flow reactor as claimed in claim 10 where a support rod is adapted to deliver a reaction component.

**12.** A continuous flow reactor as claimed in any of the preceding claims where all adjacent agitators (9) are separated by a baffle (10).

**13.** A continuous flow reactor as claimed in any of the preceding claims where a baffle (10) comprises multiple openings (12).

**14.** A continuous flow reactor as claimed in any of the preceding claims where the interconnected mixing chambers comprise a reagent basket (22).

**15.** A continuous flow reactor as claimed in claim 1 comprising:

- A vertically-installed reaction vessel (1) comprising an inlet (4) at its bottom and an outlet (5) at its top;
- A vertical rotating shaft (6) bearing between 30 and 200 impellers (9) per metre length of the shaft enclosed by the reaction vessel (1);
- Means to drive the rotating shaft (7a); and
- A reaction vessel insert (15) comprising a baffle (10) attached to a support (11), the baffle (10) comprising an opening (12) permitting the flow of liquid through it;

The insert being (15) removably fixed within the reactor such that in use the baffle (10) is held substantially perpendicular to the shaft (6) and separates the impellers (9) into interconnected mixing chambers each enclosing an impeller (9), while maintaining a gap between $20\mu m$ and $100\mu m$ in size between the outer edge of the baffle and the inner surface of the reaction vessel that allows the insert to be removed more easily for cleaning.

**Patentansprüche**

**1.** Reaktor mit kontinuierlichem Durchfluss, umfassend:

- ein Reaktionsgefäß (1), umfassend einen Einlass (4) und einen Auslass (5);
- eine rotierende Welle (6), die mindestens zwei Rührer (9) trägt und von dem Reaktionsgefäß (1) umschlossen ist;
- Mittel zum Antreiben der rotierenden Welle (7a); und

- einen Reaktionsgefäßeinsatz (15), umfassend eine an einer Halterung (11) angebrachte Trennplatte (10), wobei die Trennplatte (10) eine Öffnung (12) umfasst, die den Fluss von Flüssigkeit dadurch hindurch ermöglicht;

wobei der Einsatz (15) entfernbar in dem Reaktor befestigt ist, sodass im Einsatz eine Trennplatte (10) die Rührer (9) in miteinander verbundene Mischkammern trennt, die jeweils einen Rührer (9) umschließen, während ein Zwischenraum mit einer Größe zwischen 20 μm und 100 μm zwischen der Außenkante des Rührers (10) und der inneren Oberfläche des Reaktionsgefäßes (1) aufrechterhalten wird, der ermöglicht, dass der Einsatz (15) leichter zur Reinigung entfernt wird.

2. Reaktor mit kontinuierlichem Durchfluss nach Anspruch 1, wobei der Zwischenraum eine Größe zwischen 30 μm und 75 μm aufweist.

3. Reaktor mit kontinuierlichem Durchfluss nach Anspruch 1 oder Anspruch 2, wobei das Reaktionsgefäß (1) zylindrisch ist und eine Verhältnis von Länge zu Durchmesser zwischen 1 : 1 und 100 : 1 aufweist.

4. Reaktor mit kontinuierlichem Durchfluss nach einem der vorangehenden Ansprüche, wobei der Einlass (4) und der Auslass (5) an gegenüberliegenden Enden des Reaktionsgefäßes positioniert sind.

5. Reaktor mit kontinuierlichem Durchfluss nach einem der vorangehenden Ansprüche, umfassend mehrere rotierende Wellen (6), die jeweils mindestens zwei Rührer tragen.

6. Reaktor mit kontinuierlichem Durchfluss nach einem der vorangehenden Ansprüche, wobei eine rotierende Welle (6) in Bezug auf das Reaktionsgefäß im Wesentlichen mittig positioniert ist.

7. Reaktor mit kontinuierlichem Durchfluss nach einem der vorangehenden Ansprüche, umfassend zwischen 30 und 200 Rührern (9) pro Meter Länge der rotierenden Welle (6).

8. Reaktor mit kontinuierlichem Durchfluss nach einem der vorangehenden Ansprüche, wobei die Rührer (9) im Wesentlichen senkrecht zu der längsten Achse der rotierenden Welle (6) sind.

9. Reaktor mit kontinuierlichem Durchfluss nach einem der vorangehenden Ansprüche, wobei der Rührer (9) ein Impeller oder eine Turbine ist.

10. Reaktor mit kontinuierlichem Durchfluss nach einem der vorangehenden Ansprüche, wobei die Halterung (11) eine Haltestange umfasst.

11. Reaktor mit kontinuierlichem Durchfluss nach Anspruch 10, wobei eine Haltestange dazu angepasst ist, eine Reaktionskomponente zuzuführen.

12. Reaktor mit kontinuierlichem Durchfluss nach einem der vorangehenden Ansprüche, wobei alle benachbarten Rührer (9) durch eine Trennplatte (10) getrennt sind.

13. Reaktor mit kontinuierlichem Durchfluss nach einem der vorangehenden Ansprüche, wobei eine Trennplatte (10) mehrere Öffnungen (12) umfasst.

14. Reaktor mit kontinuierlichem Durchfluss nach einem der vorangehenden Ansprüche, wobei die miteinander verbundenen Mischkammern einen Reagenskorb (22) umfassen.

15. Reaktor mit kontinuierlichem Durchfluss nach Anspruch 1, umfassend:

- ein vertikal installiertes Reaktionsgefäß (1), umfassend einen Einlass (4) an seinem Boden und einen Auslass (5) an seiner Oberseite;
- eine vertikale rotierende Welle (6), die zwischen 30 und 200 Impeller (9) pro Meter Länge der Welle trägt und von dem Reaktionsgefäß (1) umschlossen ist;
- Mittel zum Antreiben der rotierenden Welle (7a); und
- einen Reaktionsgefäßeinsatz (15), umfassend eine an einer Halterung (11) angebrachte Trennplatte (10), wobei die Trennplatte (10) eine Öffnung (12) umfasst, die den Fluss von Flüssigkeit dadurch hindurch ermöglicht;

wobei der Einsatz (15) entfernbar in dem Reaktor befestigt ist, sodass im Einsatz die Trennplatte (10) im Wesentlichen senkrecht zu der Welle (6) gehalten wird und die Impeller (9) in miteinander verbundene Mischkammern trennt, die jeweils einen Impeller (9) umschließen, während ein Zwischenraum mit einer Größe zwischen 20 $\mu$m und 100 $\mu$m zwischen der Außenkante der Trennplatte und der inneren Oberfläche des Reaktionsgefäßes aufrechterhalten wird, der ermöglicht, dass der Einsatz (15) leichter zur Reinigung entfernt wird.

**Revendications**

1. Réacteur à flux continu comportant :

   - une cuve de réaction (1) ayant une entrée (4) et une sortie (5) ;
   - un arbre rotatif (6) portant au moins deux agitateurs (9) enfermés par la cuve de réaction (1) ;
   - un moyen servant à des fins d'entraînement de l'arbre rotatif (7a) ; et
   - un insert de cuve de réaction (15) comportant une chicane (10) fixée à un support (11), la chicane (10) comportant une ouverture (12) permettant le flux d'un liquide au travers de celle-ci ;

   l'insert (15) étant fixé de manière amovible à l'intérieur du réacteur de telle sorte que, lors de l'utilisation, une chicane (10) sépare les agitateurs (9) en chambres de mélange interconnectées renfermant chacune un agitateur (9), tout en maintenant un espace dont la taille est comprise entre 20 $\mu$m et 100 $\mu$m entre le bord extérieur de la chicane (10) et la surface intérieure de la cuve de réaction (1), ce qui facilite le retrait de l'insert à des fins de nettoyage.

2. Réacteur à flux continu selon la revendication 1, dans lequel la taille de l'espace est comprise entre 30 $\mu$m et 75 $\mu$m.

3. Réacteur à flux continu selon la revendication 1 ou la revendication 2, dans lequel la cuve de réaction (1) est cylindrique et a un rapport longueur/diamètre compris entre 1:1 et 100:1.

4. Réacteur à flux continu selon l'une quelconque des revendications précédentes, dans lequel l'entrée (4) et la sortie (5) sont positionnées au niveau d'extrémités opposées de la cuve de réaction.

5. Réacteur à flux continu selon l'une quelconque des revendications précédentes, comportant de multiples arbres rotatifs (6) portant chacun au moins deux agitateurs.

6. Réacteur à flux continu selon l'une quelconque des revendications précédentes, dans lequel un arbre rotatif (6) est positionné de manière sensiblement centrale par rapport à la cuve de réaction.

7. Réacteur à flux continu selon l'une quelconque des revendications précédentes, comportant entre 30 et 200 agitateurs (9) par mètre de longueur de l'arbre rotatif (6).

8. Réacteur à flux continu selon l'une quelconque des revendications précédentes, dans lequel les agitateurs (9) sont sensiblement perpendiculaires à l'axe le plus long de l'arbre rotatif (6).

9. Réacteur à flux continu selon l'une quelconque des revendications précédentes, dans lequel l'agitateur (9) est une roue ou une turbine.

10. Réacteur à flux continu selon l'une quelconque des revendications précédentes, dans lequel le support (11) comporte une tige de support.

11. Réacteur à flux continu selon la revendication 10, dans lequel une tige de support est adaptée pour délivrer un composant de réaction.

12. Réacteur à flux continu selon l'une quelconque des revendications précédentes, dans lequel tous les agitateurs (9) adjacents sont séparés par une chicane (10).

13. Réacteur à flux continu selon l'une quelconque des revendications précédentes, dans lequel une chicane (10) comporte de multiples ouvertures (12).

14. Réacteur à flux continu selon l'une quelconque des revendications précédentes, dans lequel les chambres de mélange interconnectées comportent un panier de réactifs (22).

15. Réacteur à flux continu selon la revendication 1, comportant :

- une cuve de réaction (1) installée à la verticale, comportant une entrée (4) au niveau de sa partie inférieure et une sortie (5) au niveau de sa partie supérieure ;
- un arbre rotatif vertical (6) portant entre 30 et 200 roues (9) par mètre de longueur de l'arbre enfermé par la cuve de réaction (1) ;
- un moyen servant à des fins d'entraînement de l'arbre rotatif (7a) ; et
- un insert de cuve de réaction (15) comportant une chicane (10) fixée à un support (11), la chicane (10) comportant une ouverture (12) permettant le flux d'un liquide au travers de celle-ci ;

l'insert (15) étant fixé de manière amovible à l'intérieur du réacteur de telle sorte que, lors de l'utilisation, la chicane (10) est maintenue de manière sensiblement perpendiculaire par rapport à l'arbre (6) et sépare les roues (9) en chambres de mélange interconnectées renfermant chacune une roue (9), tout en maintenant un espace dont la taille est comprise entre 20 $\mu$m et 100 $\mu$m entre le bord extérieur de la chicane et la surface intérieure de la cuve de réaction, ce qui facilite le retrait de l'insert à des fins de nettoyage.

Figure 1

Figure 2

Figure 3

Figure 4

Figure 5

Figure 6

**Figure 7**

Figure 8

Figure 9

Figure 10

Figure 11

**Figure 12**

10a

Figure 13

EP 4 395 926 B1

**Figure 14**

37

Figure 15

Figure 16

Figure 17

Figure 18

## Figure 19

**Figure 20**

Figure 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016009177 A
- GB 2475401 A
- WO 2020136923 A
- JP S5460275 A
- JP S5460274 A
- WO 2013019592 A2

**Non-patent literature cited in the description**

- **XU et al.** *Ind. Eng. Chem. Res.*, 2005, vol. 6103
- **VIDAURRI et al.** *AIChE*, 1985, vol. 31 (5)
- **TOSON P.** ; **DOSHI P.** ; **JAJCEVIC D**. *Processes*, 2019, vol. 7
- **MACMULLIN R** ; **WEBER M**. *Trans. Am. Inst. Chem. Eng.*, 1935, vol. 31, 409
- **MONTGOMERY, H.A.C** ; **THOM, N.S** ; **COCKBURN, A.** *J. Appl. Chem.*, 1964, vol. 14, 280
- **CARPENTER, H.** *Limnol. Oceanogr.*, 1965, vol. 10, 135
- **SWARBRICK J** ; **CARLESS, J.E**. *J. Pharm. Pharmacol.*, 1964, vol. 16, 596
- **CHAPPLE D. et al.** *Chem. Eng. Res. Des.*, 2002, vol. 80, 364
- **JASZCZUR M. et al.** *Energies*, 2020, vol. 13
- **NOURI R. M.** *J. Chem. Eng. Japan*, 1998, vol. 31, 848
- **FURUKAWA, H. et al.** *J. Chem. Eng.*, 2012
- **JAFARI, R**. *Solid Suspension and Gas Dispersion in Mechanically Agitated Vessels*, 2010